# EUROPEAN PATENT APPLICATION

(11) **EP 2 192 547 A1**
(43) Date of publication of application: **02.06.2010**
(21) Application number: 07806007.6
(22) Date of filing: 23.08.2007
(51) Int. Cl.: G06T 7/00

(54) **BIOMETRIC AUTHENTICATION SYSTEM AND BIOMETRIC AUTHENTICATION PROGRAM**

(71) Applicant: Fujitsu Limited, Kawasaki-shi, Kanagawa 211-8588 (JP)
(72) Inventor: IKEGAMI, Jun, Kawasaki-shi Kanagawa 211-8588 (JP)
(74) Representative: Fenlon, Christine Lesley
(86) International application number: PCT/JP2007/066378
(87) International publication number: WO 2009/025054

(57) **Abstract**

Registration biometric information that is biometric information of registered users previously registered as users and is referred to at the time of personal authentication as comparison targets to received biometric information, and personal authenticating methods are stored, the received biometric information and the registration biometric information is compared with each other, the received biometric information is stored as similarity-determination matching biometric information to be matched for similarity determination to determine based on the matching whether the received biometric information is similar biometric information similar to any of the registration biometric information, the similarity-determination matching biometric information and the registration biometric information is compared with each other at a predetermined time to determined whether the similar biometric information is included in the similarity-determination matching biometric information, and similarity information related to the similarity-determination matching biometric information determined to be the similar biometric information is outputted when the similarity-determination matching biometric information determined to be the similar biometric information is included in the similarity-determination matching biometric information.

## Description

### TECHNICAL FIELD

The present invention relates to a biometric authentication system and a biometric authentication program.

### BACKGROUND ART

Two biometric authenticating methods have been conventionally known. One of the methods is a "1:1 authenticating method" that enables to identify an individual by identifying biometric data of a user corresponding to an input ID from among plural pieces of biometric data registered in a database, and matching the identified biometric data to biometric data input for matching together with the ID. The other is a "1:N matching method" that enables to identify an individual by matching biometric data input for matching to plural pieces of biometric data registered in a database, without input of an ID.

It is desirable that the "1:1 authenticating method" be used to eliminate false matching to other persons and to enhance security. However, in view of convenience of users, there is a trend toward the "1:N matching method" that eliminates the need to input an ID. Normally, a biometric authentication system provides the two methods of the "1:1 authenticating method" and the "1:N authenticating method", and is operated by restricting users that are subjected to the "1:1 authenticating method" and users that are subjected to the "1:N matching method" to create their general populations and determining which method is used to authenticate each user.

The "1:N matching method", however, has a larger possibility of false authentication of other persons because data is matched to plural registrants. That is, if reference biometric information (template data) registered in a biometric authentication system includes template data similar to that of a person to be authenticated, a similar degree of concordance to that of biometric data of the person can be depicted. Normally, biometric information having a highest degree of concordance is identified as that of the person to be authenticated. However, in the case of a fingerprint for example, when a state of a fingerprint input at the time of registration (such as an angle of a finger placed on a sensor or a state of a finger problem at the time of input) and a state of a fingerprint input at the time of matching are different, registered information of other persons similar to that of the person to be authenticated can have a higher degree of concordance. Accordingly, the possibility of false authentication of other users is increased.

Also when biometric information other than the fingerprint (such as a palm vein pattern or eyeball iris) is used, a state of the biometric data information input at the time of registration and a state of biometric data information input at the time of matching can be different like in the case of the fingerprint. Accordingly, false matching to similar data can occur, and thus the possibility that other persons are erroneously authenticated is increased.

In this way, to reduce the possibility that false matching to similar data occurs and other persons are erroneously authenticated, Patent Documents 1 and 2 disclose techniques that enable a biometric authentication device that uses biometrics of facial images or fingerprint images to perform comparative matching to biometric data already stored in a database at the time of registration of the biometric data, extract therefrom similar factors to visually display the extracted similar factors, and learn a matching threshold from a similarity state to perform adjustment, for example.

Patent Document 3 discloses a technique that enables to perform comparative matching to fingerprint feature data already stored in a database at the time of registration of fingerprint feature data and, when the database contains data approximate to the fingerprint feature data input for the registration, separately store the input fingerprint feature data in an approximate database.

By applying these techniques, it is possible to prevent similar biometric information from being mixed in a database, and further, the matching threshold is elevated when there is similar biometric information. Accordingly, false matching to other persons can be reduced.

Patent Document 1: Japanese Laid-open Patent Publication No. 2005-63173
Patent Document 2: Japanese Laid-open Patent Publication No. 2000-215313
Patent Document 3: Japanese Laid-open Patent Publication No. 2000-123178

### DISCLOSURE OF INVENTION

### PROBLEM TO BE SOLVED BY THE INVENTION

The conventional techniques enable to avoid false matching to other persons in the "1:N matching method" when the biometric information is registered after it is confirmed that there is no similar data at the time of registration. However, if there is a large amount of registration biometric data, a comparative matching process at the time of registration needs a long time. Therefore, biometric authentication by the "1:N matching method" cannot be performed smoothly.

For example, in a fingerprint authentication system that uses fingerprint data as the biometric information, in which ten-thousand peoples have registered fingerprint data of ten fingers, respectively, when a new user intends to register fingerprint data of ten fingers therein, round-robin comparative matching for confirming whether there is a similar fingerprint requires million comparing processes. Even if a matching engine that can perform one matching at a high speed, that is, in 0.1 millisecond is mounted, 100 seconds (1 minute and 40 seconds) is required to perform the million comparing processes. Accordingly, the user has stresses due to a response delay before completion of the registration.
While required processing times vary with the number of registered people and processing speeds of the matching engine, the response delay cannot be avoided in any case. When a higher-performance matching engine is mounted to avoid the response delay, installation costs of the entire system is increased.

If the similarity comparison to all registration data is performed at the time of registration and registration of similar data is rejected, users that are registered in a general population of a "1:1 authenticating method" that enables secure personal authentication under ordinary circumstances with or without similar data are adversely rejected.

Further, even when the similarity state of the biometric information is checked at the registration, the state at the registration is not continuously maintained. There is a possibility that a user who has been allowed to register biometric information can be falsely matched to another person during a system operation after the registration because similarity of the registration biometric information of another person becomes higher than that of the allowed user due to changes in the state of the biometric information according to seasons or changes by growth, for example. Accordingly, the biometric authentication by the "1:N matching method" cannot be performed smoothly.

As described above, the conventional techniques have the problems that the biometric authentication by the "1:N matching method" cannot be performed smoothly either at the registration of the biometric information or during the system operation after the registration of the biometric information.

The present invention has been achieved to solve the problems of the conventional techniques, and an object of the present invention is to provide a biometric authentication system and a biometric authentication program that enables smooth biometric authentication by the "1:N matching method".

### MEANS FOR SOLVING PROBLEM

To solve the problems described above and achieve the object, a biometric authentication system includes a client device that receives biometric information; an authenticating server that receives the biometric information from the client device and performs personal authentication; and a managing device that manages the personal authentication performed by the authenticating server. The authenticating server includes a registration-biometric-information storage unit that stores therein registration biometric information that is biometric information of registered users previously registered as users, and is referred to at the personal authentication as comparison targets to the received biometric information, and personal authenticating methods; a biometric-information matching unit that matches the received biometric information with the registration biometric information stored in the registration-biometric-information storage unit; a similarity-determination matching-biometric-information storage unit that stores therein the received biometric information as similarity-determination matching biometric information to be matched for similarity determination, to determine based on the matching whether the received biometric information is similar biometric information similar to any of the registration biometric information stored in the registration-biometric-information storage unit; a similar-biometric-information determining unit that determines whether the similar biometric information is included in the similarity-determination matching biometric information by comparing the similarity-determination matching biometric information stored in the similarity-determination matching-biometric-information storage unit and the registration biometric information stored in the registration-biometric-information storage unit with each other at a predetermined time; and a similarity-information output unit that outputs similarity information related to the similarity-determination matching biometric information determined to be the similar biometric information when the similarity-determination matching biometric information determined by the similar-biometric-information determining unit to be the similar biometric information is included in the similarity-determination matching biometric information stored in the similarity-determination matching-biometric-information storage unit.

In the present invention, when the client device or the authenticating server receives the biometric information from a registration requestor who requests registration as a user, the similarity-determination matching-biometric-information storage unit stores therein the biometric information received from the registration requestor as the similarity-determination matching biometric information together with the personal authenticating method, and the similar-biometric-information determining unit determines whether there is the similar biometric information by comparing the similarity-determination matching biometric information of the registration requestor, stored in the similarity-determination matching-biometric-information storage unit and the registration biometric information stored in the registration-biometric-information storage unit with each other at a predetermined time.

In the present invention, when the client device or the authenticating server newly receives the biometric information for personal authentication from the registered user, the similarity-determination matching-biometric-information storage unit stores therein the biometric information newly received from the registered user as the similarity-determination matching biometric information together with the corresponding personal authenticating method, and the similar-biometric-information determining unit determines whether there is the similar biometric information by comparing the similarity-determination matching biometric information of the registered user, stored in the similarity-determination matching-biometric-information storage unit and the registration biometric information stored in the registration-biometric-information storage unit with each other at a predetermined time.

In the present invention, when there are registered users that are to be authenticated by a 1:1 authenticating method in the authenticating server and registered users that are to be authenticated by a 1:N matching method in the authenticating server, the authenticating server further includes a 1:N-user-information storage unit that stores therein information of the registered users that are to be authenticated by the 1:N matching method, and the similar-biometric-information determining unit determines whether there is the similar biometric information by promptly comparing the registration biometric information corresponding to the registered users that are to be authenticated by the 1:M matching method, stored in the 1:N-user-information storage unit, among the registration biometric information stored in the registration-biometric-information storage unit, and the similarity-determination matching biometric information of the registration requestor, stored in the similarity-determination matching-biometric-information storage unit with each other, and determines whether there is the similar biometric information by comparing the similarity-determination matching biometric information and all the registration biometric information stored in the registration-biometric-information storage unit with each other at a predetermined time.

In the present invention, when formats of registration data that are extracted from the biometric information as the registration biometric information and formats of matching data that are extracted from the biometric information to be matched with the registration biometric information are different in the client device or the authenticating server, the client device or the authenticating server includes a data extracting unit that extracts the registration data and the matching data from the received biometric information of the registration requestor, and the authenticating server further includes an extracted-data storage unit that stores the registration data extracted by the data extracting unit in the registration-biometric-information storage unit as the registration biometric information, and also stores the matching data extracted by the data extracting unit in the similarity-determination matching-biometric-information storage unit as the similarity-determination matching biometric information.

In the present invention, the similar-biometric-information determining unit discards the matching data as the similarity-determination matching biometric information stored in the similarity-determination matching-biometric-information storage unit when a similarity determining process is finished.

In the present invention, the similar-biometric-information determining unit determines whether there is the similar biometric information at a time previously set by an administrator of the managing device as the predetermined time.

In the present invention, the similar-biometric-information determining unit determines whether there is the similar biometric information at a time presently specified by an administrator of the managing device as the predetermined time.

In the present invention, the authenticating server further includes a time setting and storage unit that previously sets a time at which the similarity-determination matching-biometric-information storage unit stores therein the biometric information newly received for personal authentication from the registered user as the similarity-determination matching biometric information, and stores therein the set time.

In the present invention, when the matching data is extracted by image processing from biometric image information input as the biometric information to the client device or the authenticating server, the authenticating server further includes: a history storage unit that stores therein a history of image processing parameters that are obtained during extraction of the matching data by the image processing from biometric image information input by the registered user at registration and from biometric image information input by the registered user at personal authentication; and a change confirming and storage unit that, when confirming that a new image processing parameter that is obtained during extraction of new matching data as the matching data from biometric image information newly input by the registered user for personal authentication has greatly changed as compared with the image processing parameters stored in the history storage unit, stores the new matching data in the similarity-determination matching-biometric-information storage unit as the similarity-determination matching biometric information.

In the present invention, the history storage unit stores therein a history of the numbers of pieces of image feature information obtained during extraction of the matching data by the image processing from biometric image information input by the registered user at registration and from biometric image information input by the registered user at personal authentication, and when confirming that the number of pieces of new image feature information that is obtained during extraction of new matching data as the matching data from biometric image information newly input by the registered user for personal authentication has greatly changed as compared with the numbers of pieces of the image feature information stored in the history storage unit, the change confirming and storage unit stores the new matching data in the similarity-determination matching-biometric-information storage unit as the similarity-determination matching biometric information.

In the present invention, the history storage unit stores therein a history of determination values calculated as indices for matching determination when the registered user is authenticated, and when confirming a new determination value that is calculated by using biometric image information newly input by the registered user for personal authentication has greatly changed as compared with the determination values stored in the history storage unit, the change confirming and storage unit stores the new matching data in the similarity-determination matching-biometric-information storage unit as the similarity-determination matching biometric information.

In the present invention, when blood-vessel image information as image information of a blood vessel is obtained as the biometric information and the matching data is extracted from the blood-vessel image information by image processing, the history storage unit stores therein a history of sizes of a blood vessel of the registered user based on blood-vessel image information input by the registered user at registration and based on blood-vessel image information input by the registered user at personal authentication, and when confirming that a size of the blood vessel of the registered user practically obtained during extraction of new matching data as the matching data from blood-vessel image information newly input for personal authentication by the registered user has greatly changed as compared with the sizes of the blood vessel of the registered user, stored in the history storage unit, the change confirming and storage unit stores the new matching data in the similarity-determination matching-biometric-information storage unit as the similarity-determination matching biometric information.

In the present invention, the client device or the authenticating server further includes an air-temperature obtaining unit that obtains an air temperature, the history storage unit stores therein a history of an air temperature at registration of the registered user, obtained by the air-temperature obtaining unit, and an air temperature at personal authentication of the registered user, obtained by the air-temperature obtaining unit, and when confirming that an air temperature practically obtained by the air-temperature obtaining unit during extraction of new matching data as the matching data from the biometric information newly input by the registered user for personal authentication has greatly changed as compared with the air temperatures stored in the history storage unit, the change confirming and storage unit stores the new matching data in the similarity-determination matching-biometric-information storage unit as the similarity-determination matching biometric information.

In the present invention, the similarity-information output unit asynchronously notifies by an e-mail, a terminal owned by a person who has input biometric information as the similarity-determination matching biometric information or a terminal owned by an administrator of the managing device of information related to registration biometric information determined to be similar to the similarity-determination matching biometric information, a change request for the similarity-determination matching biometric information, and details of a process performed by the authenticating server when the information is determined to be similar to the similarity-determination matching biometric information, as the similarity information.

In the present invention, the similarity-information output unit notifies a person who has input biometric information as the similarity-determination matching biometric information of a result of determination indicating that there is registration biometric information similar to the similarity-determination matching biometric information, a change request for the similarity-determination matching biometric information, and details of a process performed by the authenticating server when the information is determined to be similar to the similarity-determination matching biometric information, as the similarity information.

In the present invention, when a person who has input similarity-determination matching biometric information determined to be the similar biometric information is the registered user who is to be authenticated by the 1:N matching method and the information of which is stored in the 1:N-user-information storage unit, the similarity-information output unit notifies the person of a result of determination indicating that no personal authentication is performed even when the biometric information for personal authentication is newly received from the person.

In the present invention, all of a part of the biometric information and information related to the biometric information is encrypted and stored.

In the present invention, all of a part of information to be communicated in the system is encrypted and communicated.

The present invention is a biometric authentication program that causes a computer to execute a biometric authenticating method including a client device that receives biometric information, an authenticating server that receives the biometric information from the client device and performs personal authentication, and a managing device that manages the personal authentication performed by the authenticating server. The authenticating server causes the computer to perform: a registration-biometric-information storage step of storing registration biometric information that is biometric information of registered users previously registered as users, and is referred to at the personal authentication as comparison targets to the received biometric information, and personal authenticating methods in a first storage unit; a biometric-information matching step of matching the received biometric information with the registration biometric information stored in the first storage unit; a similarity-determination matching-biometric-information storage step of storing the received biometric information as similarity-determination matching biometric information to be matched for similarity determination in a second storage unit, to determine based on the matching whether the received biometric information is similar biometric information similar to any of the registration biometric information stored in the first storage unit; a similar-biometric-information determining step of determining whether the similar biometric information is included in the similarity-determination matching biometric information by comparing the similarity-determination matching biometric information stored in the second storage unit and the registration biometric information stored in the first storage unit with each other at a predetermined time; and a similarity-information output step of outputting similarity information related to the similarity-determination matching biometric information determined to be the similar biometric information when the similarity-determination matching biometric information determined to be the similar biometric information in the similar-biometric determining step is included in the similarity-determination matching biometric information stored in the second storage unit.

### EFFECT OF THE INVENTION

According to the present invention, comparative matching between the received biometric information and the registration biometric information is not performed promptly but can be performed in a lump in a period of time when processing loads of the authenticating server are low, for example, which provides smooth biometric authentication by the "1:N matching method". A system administrator can be notified of a risk of false matching in the "1:N matching method", or a person determined to have similar biometric information can be notified of a notification prompting re-registration of biometric information. Accordingly, factors of false matching in the "1:N matching method" can be eliminated, and smooth biometric authentication by the "1:N matching method" can be achieved.

According to the present invention, the comparative matching between the biometric information received from registration requestors and the registration biometric information is not performed promptly but the registration requestors can be set as interim registration users that are authenticated only by the "1:1 authenticating method", for example. In this way, the factors of false matching in the "1:N matching method" can be eliminated until when similarity determining processes are performed in a lump at a predetermined time, and therefore smooth biometric authentication by the "1:N matching method" can be achieved.

According to the present invention, determinations as to whether the biometric information newly received from the registration requestor is similar to the registration biometric information of other persons due to changes in the biometric information from a state at the registration can be performed in a lump in a period of time when the processing loads of the authenticating server are low, for example. Accordingly, smooth biometric authentication by the "1:N matching method" can be achieved.

According to the present invention, it is possible to promptly determine whether the biometric information received from the registration requestor is similar to the registration biometric information of the registered users that are authenticated at least by the "1:N matching method", and eliminate the factors of false matching in the "1:N matching method". In this way, smooth biometric authentication by the "1:N matching method" can be achieved.

According to the present invention, data formats of the registration data and the matching data can be set to be different. In this way, the similarity determining process can be performed also in a system configuration enabling to reduce damages from robbery of the registration data, and smooth biometric authentication by the "1:N matching method" can be achieved.

According to the present invention, damages from robbery of the matching data can be avoided, and therefore smooth biometric authentication by the "1:N matching method" can be achieved.

According to the present invention, an administrator of the managing device can check a tendency of a load state of the authenticating server, and then determine and set a time when a possibility of reduced loads of the authenticating server is high as the predetermined time, for example. Therefore, smooth biometric authentication by the "1:N matching method" can be achieved.

According to the present invention, the administrator of the managing device can monitor the load state of the authenticating server, and then determine and designate a time when the loads of the authenticating server are reduced as the predetermined time, for example. Therefore, smooth biometric authentication by the "1:N matching method" can be achieved.

According to the present invention, a season (period) during which the biometric information is liable to change can be set as timing of the similarity determining process for the biometric information newly received from the registered user for personal authentication, for example. In this way, the factors of false matching in the "1:N matching method" can be efficiently eliminated, and therefore smoother biometric authentication method by the "1:N matching method" can be achieved.

According to the present invention, changes in the biometric information can be determined based on changes in a specific image processing parameter, and accordingly the factors of false matching in the "1:N matching method" can be efficiently eliminated. Therefore, smoother biometric authentication by the "1:N matching method" can be achieved.

According to the present invention, the changes in the biometric information can be determined based on changes in the number of pieces of specific image feature information, and accordingly the factors of false matching in the "1:N matching method" can be efficiently eliminated. Therefore, smoother biometric authentication by the "1:N matching method" can be achieved.

According to the present invention, the changes in the biometric information can be determined based on changes in a specific determination value such as a concordance score calculated for matching determination and a concordance rate calculated as a final matching determination result. Accordingly, the factors of false matching in the "1:N matching method" can be efficiently eliminated, and smoother biometric authentication by the "1:N matching method" can be achieved.

According to the present invention, when palm vein authentication is performed, changes in biometric information can be determined based on changes in a specific blood vessel size, and accordingly the factors of false matching in the "1:N matching method" can be efficiently eliminated. Therefore, smoother biometric authentication by the "1:N matching method" can be achieved.

According to the present invention, when the palm vein authentication is performed, changes in an air temperature, which is a major factor of the changes in the blood vessel size, can be set as timing for the similarity determining process. In this way, the factor of false matching in the "1:N matching method" can be efficiently eliminated, and smoother biometric authentication by the "1:N matching method" can be achieved.

According to the present invention, a person who has input the biometric information determined to be the similar biometric information or the administrator of the managing device can be reliably notified of a risk of false matching in the "1:N matching method". Accordingly, smoother biometric authentication by the "1:N matching method" can be achieved.

According to the present invention, the person who has input the biometric information determined to be the similar biometric information can be notified of a risk of false matching in the "1:N matching method". Therefore, smoother biometric authentication by the "1:N matching method" can be achieved.

According to the present invention, a risk of false matching in the "1:N matching method" resulting from a person determined to have the similar biometric information can be eliminated. Therefore, smoother biometric authentication by the "1:N matching method" can be achieved.

According to the present invention, even when the biometric information or the information related to the biometric information is sniffed, misuse of the information can be avoided. Therefore, smoother biometric authentication by the "1:N matching method" can be achieved.

According to the present invention, even when the information to be communicated in the system is sniffed, misuse of the information can be avoided, and therefore smoother biometric authentication by the "1:N matching method" can be achieved.

### BRIEF DESCRIPTION OF DRAWINGS

FIG. 1 is an explanatory diagram of outlines and characteristics of a biometric authentication system according to a first embodiment.
FIG. 2 is a block diagram of a configuration of a client device according to the first embodiment.
FIG. 3 is a block diagram of a configuration of an authenticating server according to the first embodiment.
FIG. 4 is an explanatory diagram of a registration-biometric-information storage unit according to the first embodiment.
FIG. 5 is an explanatory diagram of an interim-registration-information storage unit according to the first embodiment.
FIG. 6 is a block diagram of a configuration of a managing device according to the first embodiment.
FIG. 7 is an explanatory diagram of a process performed by the client device according to the first embodiment.
FIG. 8 is an explanatory diagram of an interim registering process performed by the authenticating server according to the first embodiment.
FIG. 9 is an explanatory diagram of an official registering process performed by the authenticating server according to the first embodiment.
FIG. 10 is an explanatory diagram of outlines and characteristics of a biometric authentication system according to a second embodiment.
FIG. 11 is a block diagram of a configuration of an authenticating server according to the second embodiment.
FIG. 12 is an explanatory diagram of an image-processing-parameter change-determining unit according to the second embodiment.
FIG. 13 is an explanatory diagram of a registration-biometric-information storage unit according to the second embodiment.
FIG. 14 is an explanatory diagram of an interim-registration-information storage unit according to the second embodiment.
FIG. 15 is an explanatory diagram of a process performed by a client device according to the second embodiment.
FIG. 16-1 is an explanatory diagram of an interim registering process performed by an authenticating server according to the second embodiment.
FIG. 16-2 is an explanatory diagram of a modification of an interim registering process and an official registering process performed by the authenticating server according to the second embodiment.
FIG. 17 is an explanatory diagram of a biometric authentication system according to a third embodiment.
FIG. 18 is an explanatory diagram of a biometric authentication system according to a fourth embodiment.
FIG. 19 is an explanatory diagram of a biometric authentication system according to a fifth embodiment.
FIG. 20 is an explanatory diagram of a biometric authentication system according to a sixth embodiment.
FIG. 21 is an explanatory diagram of a biometric authentication system according to a seventh embodiment.
FIG. 22 is an explanatory diagram of a biometric authentication system according to an eighth embodiment.
FIG. 23 is an explanatory diagram of a biometric authentication system according to a ninth embodiment.

### EXPLANATIONS OF LETTERS OR NUMERALS

10 Client device
10a Biometric-information input unit
10b Registration-data-extraction image-processing unit
10c Matching-data-extraction image-processing unit
10d Extracted-data transmitting unit
10e Registration-result receiving unit
20 Authenticating server
20a Extracted-data receiving unit
20b Similarity matching unit
20c Registration-result transmitting unit
20d Similarity-information administrator-transmitting unit
21a Registration-biometric-information storage unit
21b Interim-registration-information storage unit
21c Similarity-matching-timing storage unit
30 Managing device
30a Similarity-information receiving unit
30b Similarity-matching-timing setting unit

### BEST MODE(S) FOR CARRYING OUT THE INVENTION

Exemplary embodiments of a biometric authentication system and a biometric authentication program according to the present invention will be explained below in detail with reference to the accompanying drawings.

### First embodiment

### Explanations of Terms

Major terms used in following embodiments are first explained. A "1:1 authenticating method" used in the following embodiments is a biometric authenticating method that enables to identify an individual by identifying biometric information corresponding to an input ID from among biometric information of plural registered users, and matching the identified biometric information to biometric information input for matching together with the ID. A "1:N matching method" is a biometric authenticating method that enables to identify an individual by matching biometric information input for matching to biometric information of plural registered users, without input of an ID.

"Registered user" is a person previously registered as a user. "Registration biometric information" is biometric information of the "registered user" and is referred to as a comparison target for biometric information received at the time of personal authentication. "Registration requestor" is a person who requests registration as a user into a biometric authentication system. "Registration data" is data extracted from the biometric information as "registration biometric information". "Matching data" is data extracted from the biometric information to be matched to the "registration biometric information". "Similarity-determination matching biometric information" is data used to determine whether "matching data" extracted from received biometric information is similar biometric information that is similar to one of the "registration data" as the "registration biometric data".

### Outlines and Characteristics of Biometric Authentication System according to First Embodiment

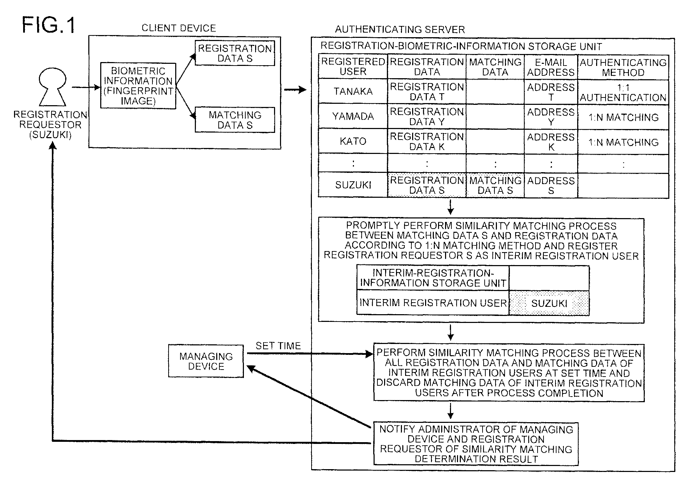

Main characteristics of a biometric authentication system according to a first embodiment of the present invention are specifically explained with reference to FIG. 1. FIG. 1 is an explanatory diagram of outlines and characteristics of the biometric authentication system according to the first embodiment.

The biometric authentication system according to the first embodiment has outlines of including a client device that receives biometric information, an authenticating server that receives the biometric information from the client device and performs personal authentication, and a managing device that manages the personal authentication performed by the authenticating server. Specifically, the authenticating server is included in a business server installed in a company. The client device is a terminal owned by a company staff. Each staff accesses the business server through the terminal owned by the staff. It is assumed that the managing device is operated by an administrator who manages the business server.

In the first embodiment, a biometric authentication system under the premise of following three points is explained. A first point is that the biometric authentication system uses "fingerprint information" as "biometric information". A second point is that the biometric authentication system includes registered users that are subjected to the "1:1 authenticating method" for personal authentication in the authenticating server and registered users that are subjected to the "1:N matching method" for personal authentication. A third point is that formats of "registration data" extracted from the biometric information as registration biometric information and formats of "matching data" extracted from the biometric information to be matched to the "registration data" are different in the client device.

The present invention is mainly **characterized in that** smooth biometric authentication by the "1:N matching method" can be performed. This main characteristic is briefly explained. When receiving biometric information from a registration requestor, the client device included in the biometric authentication system according to the first embodiment extracts registration data and matching data from the received biometric information of the registration requestor, and transmits the extracted data to the authenticating server. For example, when receiving a fingerprint image as the biometric information from "registration requestor having an ID: Suzuki" as depicted in FIG. 1, the client device according to the first embodiment extracts "registration data S" and "matching data S" from the fingerprint image, and transmits these data to the authenticating server.

In both of the registration data and the matching data, amounts of image features such as a center point, an end point, and a branch point are extracted from the fingerprint image, and binary data indicating positional relations of the end point and the branch point with respect to the center point are extracted as image-feature amount information. The registration data is highly accurate data including an amount of image features that are extracted in common from plural fingerprint images obtained by placing a finger on a fingerprint sensor plural times. The matching data includes an amount of image features extracted from a fingerprint image obtained by placing a finger on the fingerprint sensor only once.

Meanwhile, the authenticating server included in the biometric authentication system according to the first embodiment stores therein registration biometric information. For example, the authenticating server stores "registration data T" in a registration-biometric-information storage unit associated with "ID: Tanaka" enabling to uniquely identify the "registered user", as depicted in FIG. 1. The authenticating server also stores therein an "address T", which is an e-mail address used by the "registered user" with the "ID: Tanaka".

The authenticating server included in the biometric authentication system according to the first embodiment stores therein information of registered users that are to be authenticated by the "1:N matching method" and information of registered users that are to be authenticated by the "1:1 authenticating method". For example, the authenticating server stores in the registration-biometric-information storage unit that the "registered user" with the "ID: Tanaka" is a permittee for only the "1:1 authenticating method" and that the "registered user" with "ID: Yamada" is permittee for the "1:N matching method", as depicted in FIG. 1.

When receiving the registration data and the matching data from the client device, the authenticating server included in the biometric authentication system according to the first embodiment stores the registration data in the registration-biometric-information storage unit as the registration biometric information, and stores the matching data in an "item: matching data" of the registration-biometric-information storage unit as similarity-determination matching biometric information. For example, the authenticating server stores the "registration data S" and the "matching data S" received from the client device in an "stem: registration data" and an "item: matching data" corresponding to the "ID: Suzuki", respectively, as depicted in FIG. 1.

The authenticating server included in the biometric authentication system according to the first embodiment promptly compares the registration biometric information corresponding to the registered users that are to be authenticated by the "1:N authenticating method" among the registration biometric information (registration data) stored in the registration-biometric-information storage unit, and the "matching data" stored as the similarity-determination matching biometric information of the registration requestor with each other, to determine whether there is similar biometric information. For example, a process of similarity matching between the "matching data S" and the registration data subjected to the "1:N matching method" is promptly performed to determine whether the "matching data S" is similar biometric information. Further, the "registration requestor having the ID: Suzuki" is stored as an interim registration user in an interim-registration-information storage unit, as depicted in FIG. 1. In this way, when the "matching data S" is determined to be similar biometric information to the registration data subjected to the "1:N matching method", for example, it is possible to determine that the registration requestor is not permitted the "1:N matching method" but is a permittee for only the "1:1 authenticating method". When the "matching data S" is determined not to be similar biometric information, it is possible to determine that the registration requestor has a possibility of being permitted the "1:N matching method".

The authenticating server included in the authentication system according to the first embodiment then compares the similarity-determination matching biometric information (matching data) and all the registration biometric information (registration data) stored in the registration-biometric-information storage unit with each other at a time previously set by the administrator of the managing device, to determine whether there is similar biometric information. For example, the authenticating server performs a similarity matching process between all the registration data and the matching data of each interim registration user in late night hours in which system loads are low and which are set at discretion of the administrator of the managing device, as depicted in FIG. 1.

The authenticating server included in the biometric authentication system according to the first embodiment discards the matching data stored in the registration-biometric-information storage unit as the similarity-determination matching biometric information upon completion of the similarity determining process (see FIG. 1).

The authenticating server included in the biometric authentication system according to the first embodiment notifies by an e-mail a terminal owned by the person who has input the biometric information having the similarity-determination matching biometric information (matching data) extracted therefrom, and a terminal owned by the administrator of the managing device of information related to the registration biometric information (registration data) that is determined to be similar to the similarity-determination matching biometric information (matching data), a request for re-registration of biometric information, and a detailed process performed by the authenticating server when the matching data is determined to be similarity-determination biometric information, as a result of the determination on the similarity matching. The detailed process performed by the authenticating server is a process of performing only personal authentication by the "1:1 authenticating method" until the registration requestor corresponding to the matching data inputs new biometric information because the matching data is similar biometric information.

In the first embodiment, the example in which the similarity determining process with respect to all the registration data is performed in the period previously set by the administrator of the managing device is explained. However, the present invention is not limited thereto, and can be applied to an example in which the administrator of the managing device monitors a load condition of the authenticating server to detect a time when the load condition becomes low, and instructs the authenticating server to start the similarity determining process at the detected time.

In this way, the biometric authentication system according to the first embodiment does not perform the comparative matching between the received biometric information and the registration biometric information promptly but can perform the comparative matching in a lump during a period when the processing loads of the authenticating server are low, for example. Therefore, smooth biometric authentication by the "1:N matching method" as the main feature above mentioned can be achieved. Further, the biometric authentication system notifies the system administrator of a risk of false matching in the "1:N matching method", or sends a notification prompting re-registration of biometric information to a person having the matching data determined to be similar biometric information. Accordingly, factors of the false matching in the "1:N matching method" can be eliminated, and thus smooth biometric authentication by the "1:N matching method" can be achieved.

The authenticating server included in the biometric authentication system according to the first embodiment performs the similarity matching process for the biometric information received from the registration requestor to achieve the smooth biometric authentication by the "1:N matching method". However, the authenticating server normally performs personal authentication by matching the received biometric information and the registration biometric information stored in the registration-biometric-information storage unit.

### Configuration of Client Device according to First Embodiment

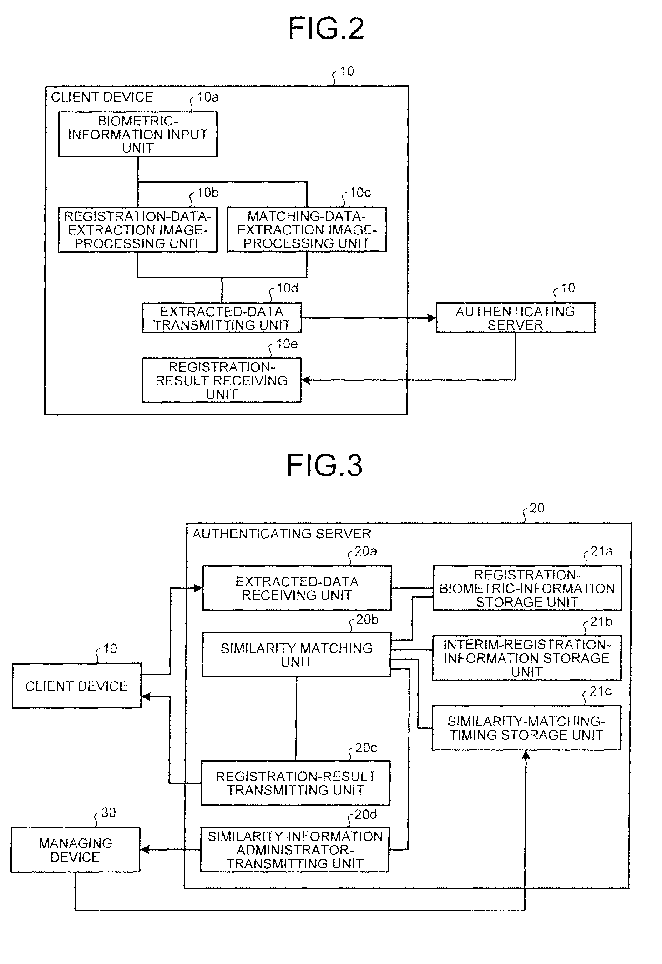

A configuration of the client device according to the first embodiment is explained with reference to FIG. 2. FIG. 2 is a block diagram of a configuration of the client device according to the first embodiment.

As depicted in FIG. 2, a client device 10 according to the first embodiment includes a biometric-information input unit 10a, a registration-data-extraction image-processing unit 10b, a matching-data-extraction image-processing unit 10c, an extracted-data transmitting unit 10d, and a registration-result receiving unit 10e. The client device 10 is connected to an authenticating server 20 through a communication network.

The biometric-information input unit 10a obtains biometric information (for example, a fingerprint image) input by a registration requestor.

The registration-data-extraction image-processing unit 10b performs image processing to extract registration data from the biometric information (for example, a fingerprint image) obtained by the biometric-information input unit 10a.

The matching-data-extraction image-processing unit 10c performs image processing to extract matching data from the biometric information (for example, a fingerprint image) obtained by the biometric-information input unit 10a.

The extracted-data transmitting unit 10d transmits the registration data extracted by the registration-data-extraction image-processing unit 10b and the matching data extracted by the matching-data-extraction image-processing unit 10c to the authenticating server 20.

The registration-result receiving unit 10e receives from the authenticating server 20, a registration result which is a result of a similarity determining process performed by the authenticating server 20. Specifically, the registration-result receiving unit 10e receives the registration result by an e-mail, and notifies the registration requestor of the result. For example, the registration-result receiving unit 10e transmits a fact that the matching data extracted from the biometric information of the registration requestor is determined to be similar biometric information, together with a notification such as "you cannot be registered as a permittee for the 1:N matching method" or "input new biometric information".

### Configuration of Authenticating Server according to First Embodiment

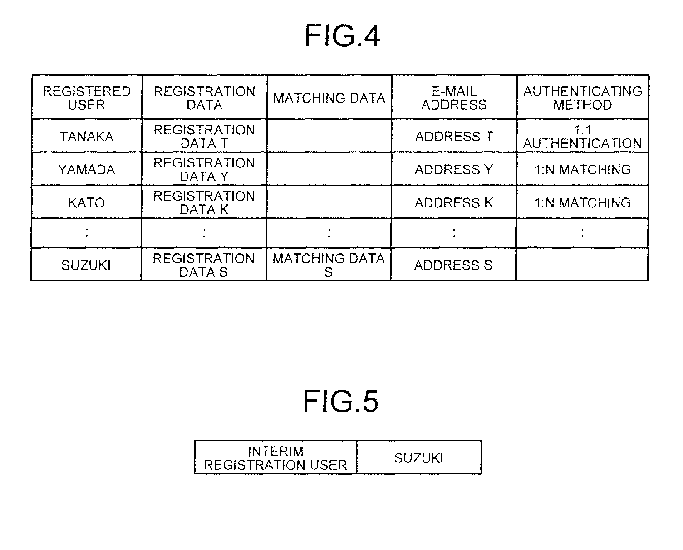

A configuration of the authenticating server according to the first embodiment is explained with reference to FIGS. 3 to 5. FIG. 3 is a block diagram of a configuration of the authenticating server according to the first embodiment. FIG. 4 is an explanatory diagram of a registration-biometric-information storage unit according to the first embodiment. FIG. 5 is an explanatory diagram of an interim-registration-information storage unit according to the first embodiment.

As depicted in FIG. 3, the authenticating server 20 according to the first embodiment includes an extracted-data receiving unit 20a, a similarity matching unit 20b, a registration-result transmitting unit 20c, a similarity-information administrator-transmitting unit 20d, a registration-biometric-information storage unit 21a, an interim-registration-information storage unit 21b, and a similarity-matching-timing storage unit 21c. The authenticating server 20 is connected to the client device 10 and a managing device 30 through a communication network, respectively.

The registration-biometric-information storage unit 21a stores therein the registration biometric information. For example, the registration-biometric-information storage unit 21a stores therein the "registration data T" associated with the "ID: Tanaka" that enables to uniquely identify the "registered user" and also stores therein the "address T" as the e-mail address used by the "registered user" with the "ID: Tanaka", as depicted in FIG. 4.

The registration-biometric-information storage unit 21a stores therein information of registered users that are to be authenticated by the "1:N matching method" and information of registered users that are to be authenticated by the "1:1 authenticating method". For example, the registration-biometric-information storage unit 21a stores therein that the "registered user" with the "ID: Tanaka" is a permittee for only the "1:1 authenticating method", and "registered users" with "ID: Yamada" and "ID: Kato" are permittees for the "1:N matching method", as depicted in FIG. 4.

The extracted-data receiving unit 20a receives the registration data and the matching data of a registration requestor from the client device 10, and stores the received registration data in the registration-biometric-information storage unit 21a as the registration biometric information and stores the received matching data in the registration-biometric-information storage unit 21a as the similarity-determination matching biometric information. For example, the extracted-data receiving unit 20a stores the "registration data S" and the "matching data S" received from the client device 10 in an "item: registration data" and an "item: matching data" corresponding to the "ID: Suzuki", respectively, as depicted in FIG. 4.

The similarity matching unit 20b promptly compares the registration biometric information (registration data) corresponding to the registered users that are to be authenticated by the "1:N matching method" among the registration biometric information (registration data) stored in the registration-biometric-information storage unit 21a and the "matching data" stored as the similarity-determination matching biometric information of the registration requestor with each other, to determine whether there is similar biometric information. For example, the similarity matching unit 20b promptly performs a similarity matching process between the "matching data S" and the registration data subjected to the "1:N matching method" to determine whether the "matching data S" is similar biometric information. The similarity matching unit 20b further stores the "registration requestor having the ID: Suzuki" in the interim-registration-information storage unit 21b as an interim registration user, as depicted in FIG. 5.

The similarity-matching-timing storage unit 21c stores therein a time previously set by the administrator of the managing device, at which the similarity matching process is to be performed. For example, the similarity-matching-timing storage unit 21c stores therein late night hours in which system loads are low and which are set at discretion of the administrator of the managing device 30, as the time for performing the similarity matching process to all the registration data.

The similarity matching unit 20b then compares the matching data (stored in the registration-biometric-information storage unit 21a) corresponding to the interim registration information stored in the interim-registration-information storage unit 21b and all the registration biometric information (registration data) stored in the registration-biometric-information storage unit 2a with each other at the time previously set by the administrator of the managing device 30, to determine whether there is similar biometric information.

The similarity matching unit 20b discards the matching data stored in the registration-biometric-information storage unit 21a as the similarity-determination matching biometric information upon completion of the similarity determining process.

The registration-result transmitting unit 20c and the similarity-information administrator-transmitting unit 20d notify the client device 10 owned by the person who has input the biometric information having the similarity-determination matching biometric information (matching data) extracted therefrom or the managing device 30, for example, by an e-mail of information related to the registration biometric information (registration data) determined to be similar to the similarity-determination matching biometric data (matching data), a request for re-registration of biometric information, or a detailed process performed by the authenticating server when the matching data is determined to be similarity-determination biometric information, as a result of the similarity matching by the similarity matching unit 20b.

Configuration of Managing Device according to First Embodiment

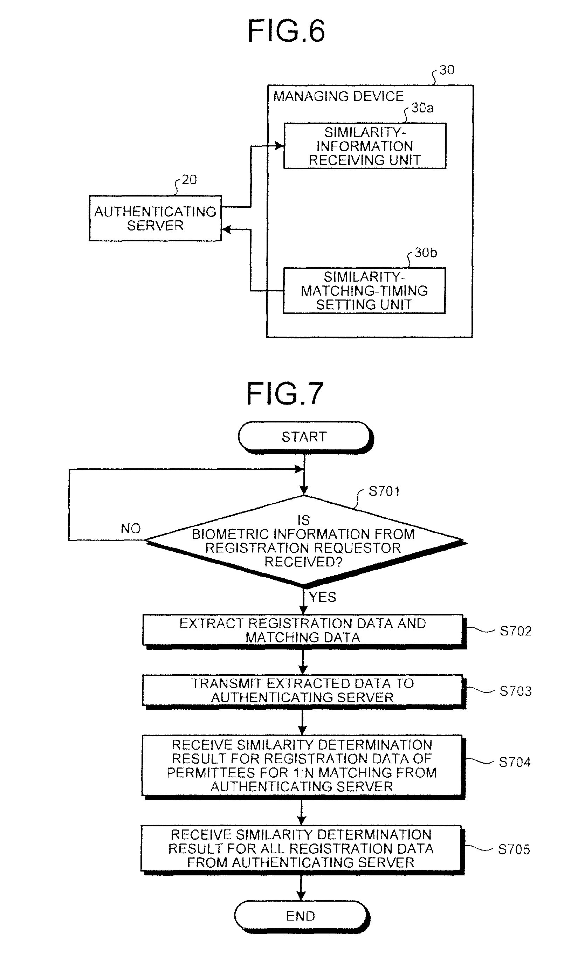

A configuration of the managing device according to the first embodiment is explained with reference to FIG. 6. FIG. 6 is a block diagram of a configuration of the managing device according to the first embodiment.

As depicted in FIG. 6, the managing device 30 according to the first embodiment includes a similarity-information receiving unit 30a and a similarity-matching-timing setting unit 30b, and is connected to the authenticating server 20 through the communication network.

The similarity-matching-timing setting unit 30b receives the time previously set by the administrator of the managing device 30, at which the similarity matching process is to be performed, and transmits the received time to the similarity-matching-timing storage unit 21c in the authenticating server 20.

The similarity-information receiving unit 30a receives the similarity information transmitted from the authenticating server 20.

### Process Procedure performed by Biometric Authentication System according to First Embodiment

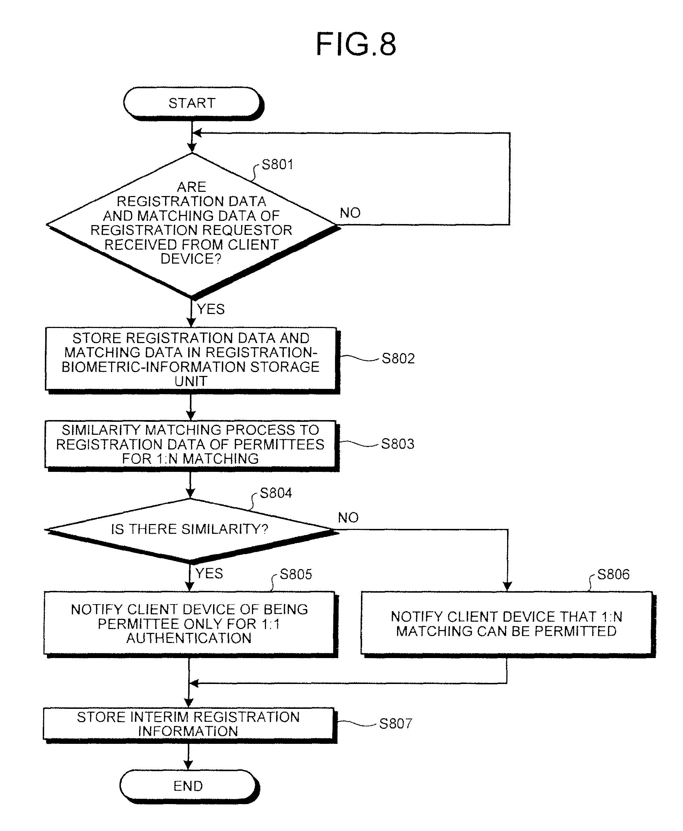

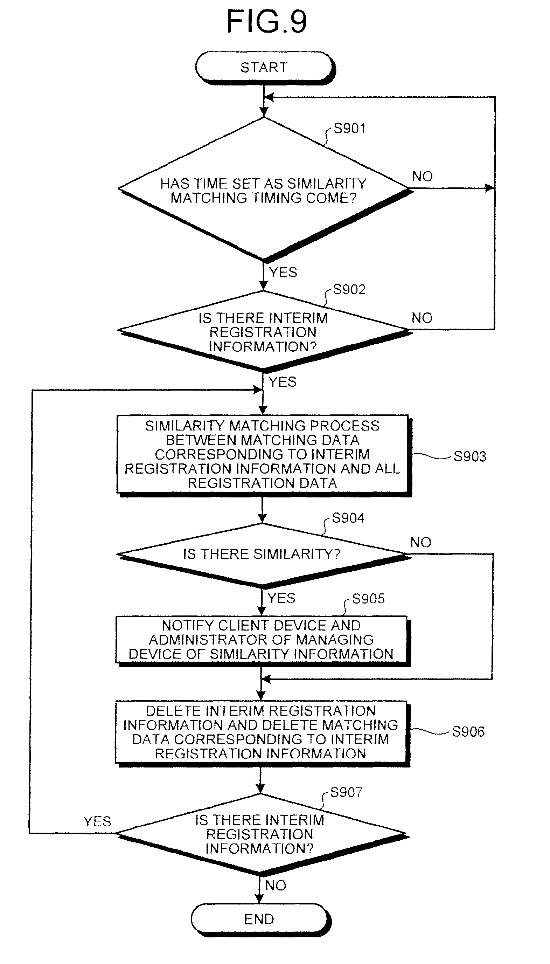

A process performed by the biometric authentication system according to the first embodiment is explained with reference to FIGS. 7 to 9. FIG. 7 is an explanatory diagram of a process performed by the client device according to the first embodiment. FIG. 8 is an explanatory diagram of an interim registering process performed by the authenticating server according to the first embodiment. FIG. 9 is an explanatory diagram of an official registering process performed by the authenticating server according to the first embodiment.

### Process Procedure performed by Client Device according to First Embodiment

As depicted in FIG. 7, when the client device 10 according to the first embodiment receives biometric information from a registration requestor through the biometric-information input unit 10a (YES at Step S701), the registration-data-extraction image-processing unit 10b extracts the registration data from the received biometric information, and the matching-data-extraction image-processing unit 10c extracts the matching data therefrom (Step S702).

The extracted-data transmitting unit 10d transmits the registration data extracted by the registration-data-extraction image-processing unit 10b and the matching data extracted by the matching-data-extraction image-processing unit 10c to the authenticating server 20 (Step S703).

The registration-result receiving unit 10e then receives from the authenticating server 20, a result of the similarity determination between the matching data transmitted by the extracted-data transmitting unit 10d to the authenticating server 20 and the registration data of permittees for the 1:N matching (Step S704). For example, the registration-result receiving unit 10e receives a similarity determination result indicating that the "1:N matching method" is not permitted when the matching data transmitted to the authenticating server 20 is determined to be similar biometric information to the "registration data of a permittee for the 1:N matching", and a similarity determination result indicating there is a possibility that the "1:N matching method" can be permitted when the matching data is determined not to be similar biometric information.

The registration-result receiving unit 10e then receives a similarity determination result for all the registration data from the authenticating server 20 (Step S705), and ends the process. The registration-result receiving unit 10e receives a similarity determination result indicating that the requestor is officially registered as a permittee for the "1:N matching method", or a similarity determination result indicating that the requestor is officially registered as a permittee for only the "1:1 authenticating method", for example.

### Procedure of Interim Registering Process performed by Authenticating Server according to First Embodiment

As depicted in FIG. 8, when receiving the registration data and the matching data of the registration requestor from the client device 10 (YES at Step S801), the extracted-data receiving unit 20a included in the authenticating server 20 according to the first embodiment stores the registration data and the matching data in the registration-biometric-information storage unit 21a (Step S802).

The similarity matching unit 20b then promptly compares the registration data corresponding to the registered users that are to be authenticated by the "1:N matching method" among the registration biometric information (registration data) stored in the registration-biometric-information storage unit 21a and the matching data stored as the similarity-determination matching biometric information of the registration requestor with each other, to determine whether there is similar biometric information (Step S803).

when the similarity matching unit 20b determines that the matching data is similar biometric information (YES at Step S804), the registration-result transmitting unit 20c notifies the client device 10 of "being a permittee only for the 1:1 authentication" (Step S805).

When the similarity matching unit 20b determines that the matching data is not similar biometric information (NO at Step S804), the registration-result transmitting unit 20c notifies the client device 10 of "being a permittee for only authentication that the 1:N matching can be permitted" (Step S806).

After the process at Step S805 or S806, the similarity matching unit 20b stores the interim registration information in the interim-registration-information storage unit 21b (Step S807), and ends the process.

### Procedure of Official Registering Process performed by Authenticating Server according to First Embodiment

As depicted in FIG. 9, in the authenticating server 20 according to the first embodiment, when the time that is set as the similarity matching timing and stored in the similarity-matching-timing storage unit 21c has come (YES at Step S901), the similarity matching unit 20b refers to the interim-registration-information storage unit 21b. When there is the interim registration information (YES at Step S902), the similarity matching unit 20b performs a similarity matching process between each of the matching data corresponding to the interim registration information stored in the interim-registration-information storage unit 21b and all the registration data stored in the registration-biometric-information storage unit 21a (Step S903).

When the similarity matching unit 20b determines that the matching data is similar biometric information (YES at Step S904), the registration-result transmitting unit 20c notifies the client device 10 of the similarity information, and the similarity-information administrator-transmitting unit 20d notifies the administrator of the managing device 30 of the similarity information (Step S905).

When the similarity matching unit 20b determines that the matching data is not similar biometric information (NO at Step S904) or after the process at Step S905, the similarity matching unit 20b deletes the interim registration information corresponding to the matching data that has been subjected to the similarity determining process from the interim-registration-information storage unit 21b, and deletes the matching data from the registration-biometric-information storage unit 21a (Step S906).

The similarity matching unit 20b refers to the interim-registration-information storage unit 21b and, when there is no interim registration information (NO at Step S907), ends the process.

On the other hand, when referring to the interim-registration-information storage unit 21b and there is another interim registration information (YES at Step S907), the similarity matching unit 20b returns to Step S903 to perform the similarity matching process again.

### Effect of First Embodiment

As described above, according to the first embodiment, the comparative matching between the received biometric information and the registration biometric information is not performed promptly but can be performed in a lump in a period of time when the processing loads of the authenticating server are low, for example. Accordingly, smooth biometric authentication by the "1:N matching method" can be achieved. That is, while the operation of the biometric authentication system is retarded due to a great deal of processing time when the comparative matching is performed promptly each time the biometric information is received from a registration requestor as in the conventional technique, the retardation in the operation of the biometric authentication system can be avoided when the comparative matching is performed in a lump in a predetermined period as in the present invention. In this way, the smooth biometric authentication by the "1:N matching method" can be achieved. When a risk of false matching in the "1:N matching method" is notified the system administrator or a notification promoting re-registration of biometric information is issued to a person who has been determined to have similar biometric information, factors of false matching in the "1:N matching method" can be eliminated. Accordingly, the smooth biometric authentication by the "1:N matching method" can be achieved.

According to the first embodiment, the comparative matching between the biometric information received from the registration requestor and the registration biometric information is not performed promptly. Alternatively, the registration requestor can be set as an interim registration user to be authenticated only by the "1:1 authenticating method", for example. In this way, factors of false matching in the "1:N matching method" can be eliminated until when the similarity determination processes are performed in a lump at a predetermined time. Accordingly, the smooth biometric authentication by the "1:N matching method" can be achieved.

According to the first embodiment, it is possible to promptly determine at least whether the biometric information received from a registration requestor is similar to the registration biometric information of registered users that are to be authenticated by the "1:N matching method", and eliminate the factors of false matching in the "1:N matching method". Therefore, the smooth biometric authentication by the "1:N matching method" can be achieved.

According to the first embodiment, when the registration data and the matching data have different data formats, the similarity determining process can be performed also in a system configuration that enables to reduce damages by a theft of the registration data. Accordingly, the smooth biometric authentication by the "1:N matching method" can be achieved.

According to the first embodiment, damages by a theft of the matching data can be avoided, which provides the smooth biometric authentication by the "1:N matching method".

According to the first embodiment, the administrator of the managing device 30 can recognize a tendency of a load status of the authenticating server 20, and then assess and set a time at which there is a higher possibility that the loads of the authenticating server 20 are reduced as the predetermined time. Therefore, the smooth biometric authentication by the "1:N matching method" can be achieved.

According to the first embodiment, a person who has input the biometric information determined to be similar biometric information or the administrator of the managing device can be reliably notified by an e-mail that there is a possibility of false matching in the "1:N matching method". Therefore, smoother biometric authentication by the "1:N matching method" can be achieved.

According to the first embodiment, the person who has input the biometric information determined to be the similar biometric information can be notified that there is a possibility of false matching in the "1:N matching method". Therefore, smoother biometric authentication by the "1:N matching method" can be achieved.

### Second embodiment

In the first embodiment, the example in which the similarity determining process is performed using the biometric information received from the registration requestor is explained. In a second embodiment, an example in which the similarity determining process is performed using biometric information newly received from a registered user for personal authentication is explained.

### Outlines and Characteristics of Biometric Authentication System according to Second Embodiment

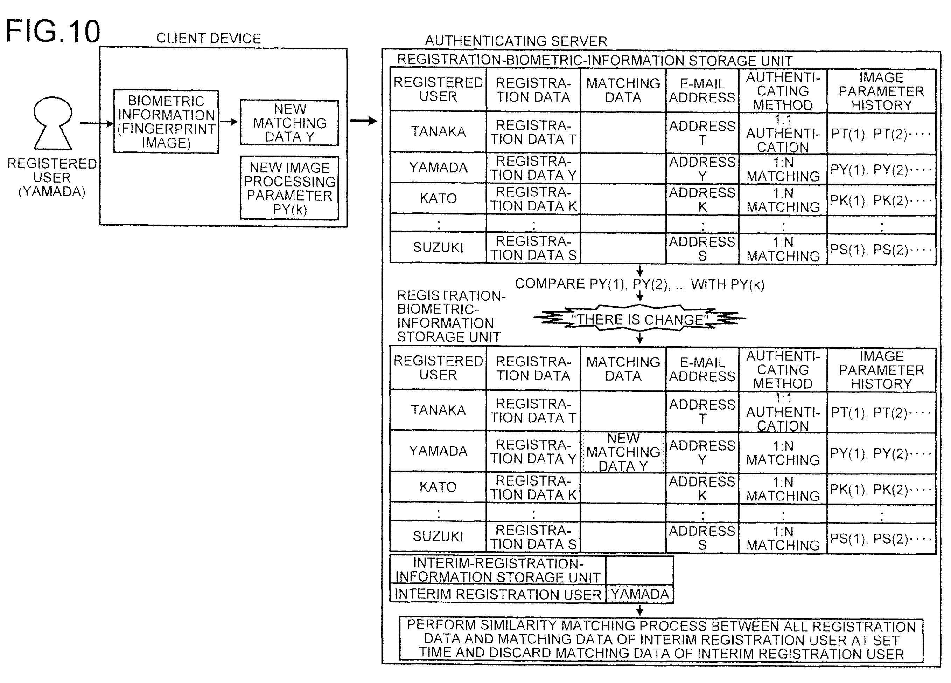

Main characteristics of a biometric authentication system according to the second embodiment are first explained specifically with reference to FIG. 10. FIG. 10 is an explanatory diagram of outlines and characteristics of the biometric authentication system according to the second embodiment.

The biometric authentication system according to the second embodiment includes a client device, an authenticating server, and a managing device, like in the first embodiment. The biometric authentication system uses the "fingerprint information" as the "biometric information", in which the registered users that are to be authenticated by the "1:1 authenticating method" and the registered users that are to be authenticated by the "1:N matching method" are divided in the authenticating server. In the client device, the "registration data" extracted from the biometric information as the registration biometric information and the "matching data" extracted from the biometric information for matching the "registration data" have different formats.

When receiving new biometric information (fingerprint image) for personal authentication from a registered user, the client device included in the biometric authentication system according to the second embodiment extracts new matching data from the received new biometric information. For example, the client device receives a fingerprint image from the registered user (ID: Yamada) and performs image processing to extract "new matching data Y", as depicted in FIG. 10. The client device simultaneously obtains a new image processing parameter "PY(k)", which is an image processing parameter obtained during the image processing for extracting new matching data B. The image processing parameter is a change in a threshold or histogram used when biometric image information of a multivalued image is converted into a white and black binary image, or the number of pixels to be trimmed around a binary image when the binary image is to be thinned, for example.

The client device included in the biometric authentication system according to the second embodiment transmits the extracted new matching data and the obtained new image processing parameter to the authenticating server included in the biometric authentication system according to the second embodiment. For example, the client device transmits the "new matching data Y" and the new image processing parameter "PY(k)", as depicted in FIG. 10.

The authenticating server included in the biometric authentication system according to the second embodiment stores therein the registration biometric information, like in the first embodiment. For example, the authenticating server stores "registration data Y", an "address Y" as an e-mail address, and information indicating a permittee for the "1:N matching method" in the registration-biometric-information storage unit, associated with the "ID: Yamada" that enables to uniquely identify the "registered user", as depicted in FIG. 10. The authenticating server further stores therein an image parameter history "PY(1), PY(2), ...", which is a history of an image parameter obtained when the registration data Y is extracted from the biometric information input by the registered user (ID: Yamada) at the registration, and an image parameter obtained when the matching data is extracted from biometric information input for personal authentication after the registration, as depicted in FIG. 10, for example.

Upon receipt of the new matching data and the new image processing parameter of the registered user, which are extracted by the client device, the authenticating server included in the biometric authentication system according to the second embodiment performs a matching process between the received new matching data and the registration data stored in the registration-biometric-information storage unit for personal authentication.

When the personal authentication based on the new matching data is successfully performed in the matching process, the authenticating server included in the biometric authentication system according to the second embodiment compares the new image processing parameter and the image parameter history stored in the registration-biometric-information storage unit with each other. When it is confirmed that the new image processing parameter has greatly changed as compared with the image parameter history stored in the registration-biometric-information storage unit, the authenticating server stores the new matching data in the "matching data" of the registration-biometric-information storage unit, as the similarity-determination matching biometric information. For example, when "PY(1), PY(2), ..." is compared with "PY(k)" and it is confirmed that "PY(K)" has greatly changed as depicted in FIG. 10, the authenticating server stores the "new matching data Y" in the "item: matching data" associated with the "ID: Yamada".

The authenticating server included in the biometric authentication system according to the second embodiment determines that the "new matching data Y" has a risk of false matching during personal authentication by the "1:N matching method", and stores the "ID: Yamada" in the interim-registration-information storage unit as interim registration information, as depicted in FIG. 10.

The authenticating server included in the biometric authentication system according to the second embodiment performs a similarity matching process between all the registration data and the matching data of the interim registration user at the set time (for example, in late night hours), and discards the matching data of the interim registration user (for example, new matching data B) upon completion of the process, like in the first embodiment.

In this way, the biometric authentication system according to the second embodiment can perform the determinations as to whether the new biometric information received from a registered user is similar to the registration biometric information of other persons because of changes in the information from a state at the registration, in a lump in the period of time when the processing loads of the authenticating server are low, for example. Accordingly, the smooth biometric authentication by the "1:N matching method" can be achieved.

### Configuration of Client Device according to Second Embodiment

A configuration of the client device according to the second embodiment is explained with reference to FIG. 2. FIG. 2 is the block diagram of the configuration of the client device according to the first embodiment.

Although the client device 10 according to the second embodiment has the same configuration as that of the client device 10 according to the first embodiment as depicted in FIG. 2, the components thereof perform different processes. The processes are mainly explained below.

The biometric-information input unit 10a obtains biometric information (for example, a fingerprint image) newly input by a registered user for personal authentication.

The matching-data-extraction image-processing unit 10c performs image processing to extract new matching data from the biometric information (for example, a fingerprint image) obtained by the biometric-information input unit 10a. The matching-data-extraction image-processing unit 10c simultaneously obtains a new image processing parameter in the course of the image processing.

The extracted-data transmitting unit 10d transmits the new matching data extracted by the matching-data-extraction image-processing unit 10c and the new image processing parameter obtained by the matching-data-extraction image-processing unit 10c to the authenticating server 20.

The registration-result receiving unit 10e receives from the authenticating server 20, a registration result which is a result of the similarity determining process performed by the authenticating server 20. Specifically, the registration-result receiving unit 10e receives the registration result by an e-mail, and notifies the registered user who has input the new biometric information for personal authentication of the registration result. For example, the registration-result receiving unit 10e notifies that "the new matching data extracted from the biometric information of the registered user has greatly changed and thus is determined to be similar biometric information as a result of similarity matching determination".

The registration-result receiving unit 10e receives a result of the personal authenticating process performed by the authenticating server 20, from the authenticating server 20. Specifically, the registration-result receiving unit 10e receives a result of the authentication according to the matching process between the new matching data and the registration data (successful personal authentication or personal authentication failure) by an e-mail, and notifies the registered user who has input the new biometric information for the personal authentication of the result.

### Configuration of Authenticating Sever according to Second Embodiment

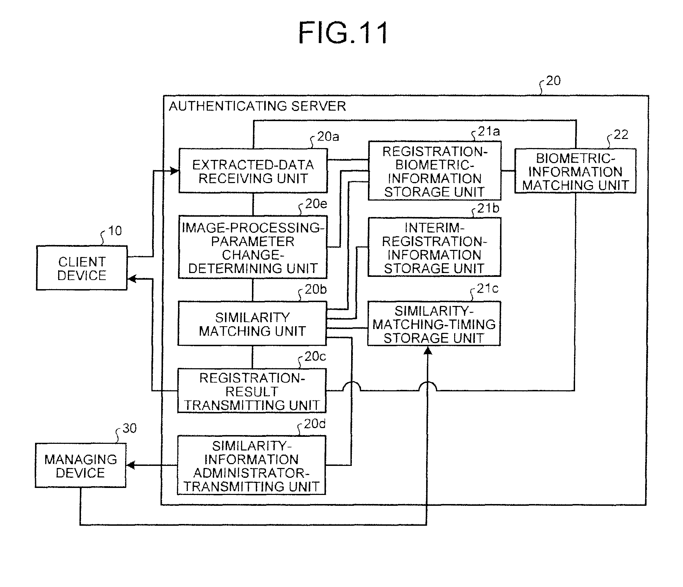

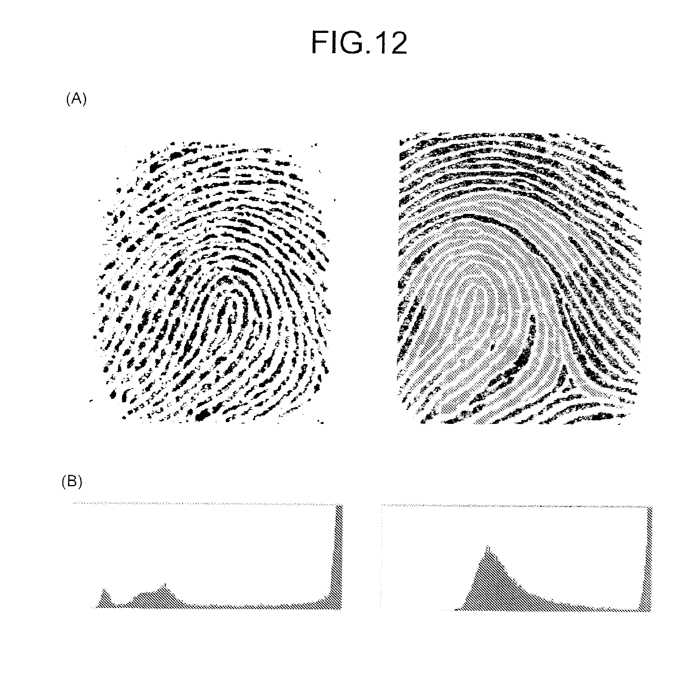

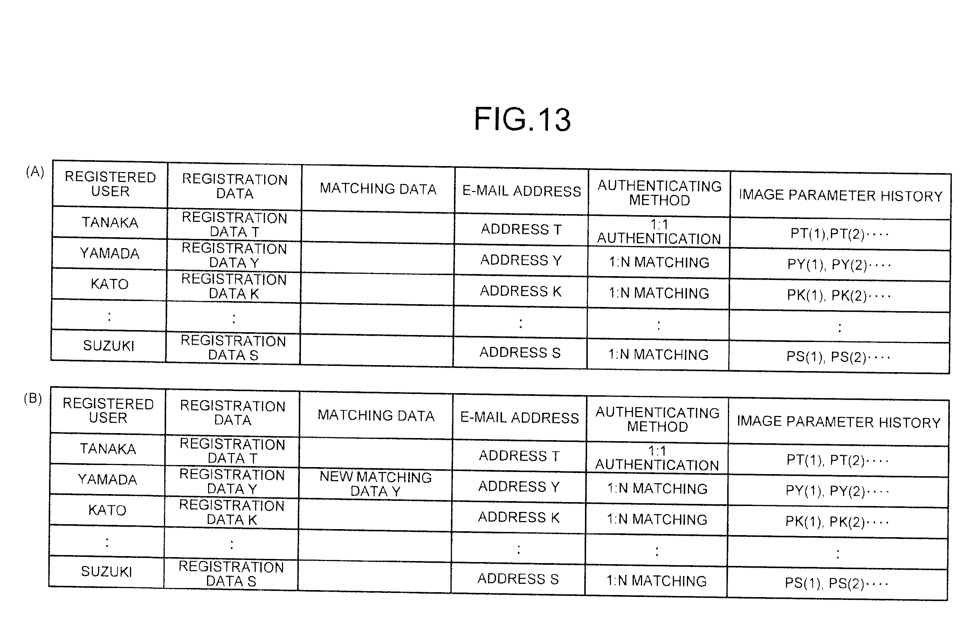

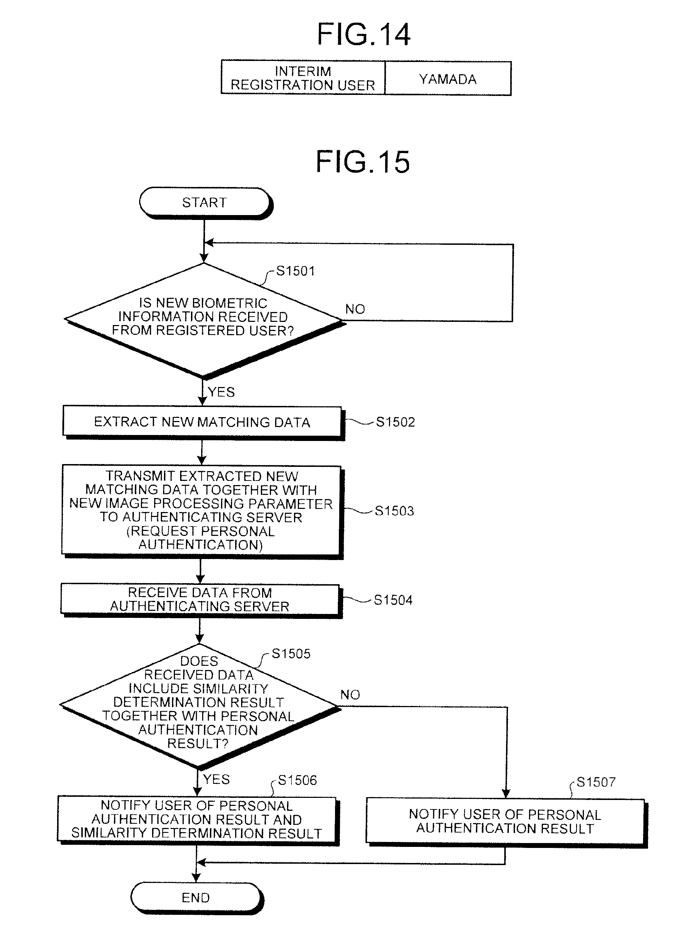

A configuration of the authenticating server according to the second embodiment is explained with reference to FIGS. 11 to 14. FIG. 11 is a block diagram of a configuration of the authenticating server according to the second embodiment. FIGS. 12 are explanatory diagrams of an image-processing-parameter change-determining unit according to the second embodiment. FIGS. 13 are explanatory diagrams of a registration-biometric-information storage unit according to the second embodiment. FIG. 14 is an explanatory diagram of an interim-registration-information storage unit according to the second embodiment.

As depicted in FIG. 11, the authenticating server 20 according to the second embodiment is different from the authenticating server 20 according to the first embodiment in that an image-processing-parameter change-determining unit 20e is further included. A biometric-information matching unit 22 that is included also in the authenticating server 20 according to the first embodiment but not depicted in FIG. 3 is depicted in FIG. 11. These units are mainly explained below. A configuration of the managing device 30 according to the second embodiment and processes performed thereby are the same as those of the managing device 30 according to the first embodiment, and thus explanations thereof will be omitted.

The registration-biometric-information storage unit 21a stores therein the "registration data Y", the "address Y" as the "e-mail address", and the information indicating a permittee for the "1:N matching method", associated with the "ID: Yamada" that enables to uniquely identify the "registered user", as depicted in FIG. 13(A), for example. The registration-biometric-information storage unit 21a also stores therein the image parameter history "PY(1), PY(2), ...", which is the history of the image parameter obtained when the registration data Y is extracted from the biometric information input by the registered user (ID: Yamada) at the registration, and the image parameter obtained when the matching data is extracted from the biometric information input for personal authentication after the registration, as depicted in FIG. 13(A), for example.

The extracted-data receiving unit 20a receives the new matching data and the new image processing parameter of the registered user from the client device 10. For example, the extracted-data receiving unit 20a receives the "new matching data Y" and the new image processing parameter "PY(k)" from the client device 10 (see FIG. 10).

The biometric-information matching unit 22 matches the new matching data received from the extracted-data receiving unit 20a with the registration data stored in the registration-biometric-information storage unit 21a, to determine whether there is registration data corresponding with the new matching data, thereby performing a normal personal authenticating process. When there is no corresponding registration data, the biometric-information matching unit 22 notifies the client device 10 of a result indicating "personal authentication failure" through the registration-result transmitting unit 20c. When there is the corresponding registration data, the biometric-information matching unit 22 determines "successful personal authentication", and instructs the image-processing-parameter change-determining unit 20e to compare the new image processing parameter received together with the new matching data and the image parameter history stored in the registration-biometric-information storage unit 21a with each other.

When the "personal authentication" using the new matching data is successfully performed in the biometric-information matching unit 22, the image-processing-parameter change-determining unit 20e compares the received new image processing parameter and the image parameter history stored in the registration-biometric-information storage unit 21a with each other. When it is confirmed that the new image processing parameter has greatly changed as compared with the image parameter history stored in the registration-biometric-information storage unit 21a, the image-processing-parameter change-determining unit 20e stores the new matching data in the "matching data" of the registration-biometric-information storage unit 21a as the similarity-determination matching biometric information. For example, "PY(1), Pry(2), ..." is compared with "PY(k)", and when the value of "PY(k)" is considerably different, the image-processing-parameter change-determining unit 20e stores the "new matching data Y" in the "item: matching data" associated with the "ID: Yamada", as depicted in FIG. 13(B).

An example in which the image-processing-parameter change-determining unit 20e determines that the image processing parameter has greatly changed is explained with reference to FIGS. 12. FIG. 12(A) depicts fingerprints of a finger of a person in a grayscale of 256 gradations. A left side view of FIG. 12(A) is a fingerprint image input in a dry condition, and a right side view of FIG. 12(A) is a fingerprint image input in a wet condition. A left side view of FIG. 12(B) is a histogram of the fingerprint image depicted in the left side view of FIG. 12(A). A right side view of FIG. 12(B) is a histogram of the fingerprint image depicted in the right side view of FIG. 12(A). The histogram depicted in the left side view of FIG. 12(B) has a tendency to be entirely white due to the dry condition, and the histogram average is "211". The histogram depicted in the right side view of FIG. 12(B) has a tendency to be entirely black due to the wet condition, and the histogram average is "176". As seen from the above, the values that can be recognized from the histograms greatly vary according to whether the finger has a tendency to be entirely dry or wet. Accordingly, when a threshold of the histogram average for the similarity determining process to the new matching data is set at 200, for example, it is possible to determine whether the fingerprint image is input in a wet or dry condition, so that changes in the biometric information can be determined.

When it is confirmed that the received new image processing parameter has greatly changed as compared with the image parameter history stored in the registration-biometric-information storage unit 21a, the image-processing-parameter change-determining unit 20e stores the "ID: Yamada" in the interim-registration-information storage unit 21b as the interim registration information as depicted in FIG. 14, for example.

When the "personal authentication" using the new matching data in the biometric-information matching unit 22 fails, the registration-result transmitting unit 20c notifies the client device 10 owned by the person who has input the biometric information having the new matching data extracted therefrom of a result indicating "personal authentication failure".

When the "personal authentication" using the new matching data in the biometric-information matching unit 22 is successfully performed and the image-processing-parameter change-determining unit 20e confirms that the change in the new image processing parameter is below the threshold, the registration-result transmitting unit 20c notifies the client device 10 owned by the person who has input the biometric information having the new matching data extracted therefrom of a result indicating "successful personal authentication" and a result indicating "no interim registering process is to be performed".

When the "personal authentication" using the new matching data in the biometric-information matching unit 22 is successfully performed, and when the image-processing-parameter change-determining unit 20e confirms that the change in the new image processing parameter is great and the information is stored in the interim-registration-information storage unit 21b as the interim registration information, the registration-result transmitting unit 20c notifies the client device 10 owned by the person who has input the biometric information having the new matching data extracted therefrom of a result indicating "successful personal authentication" and a result indicating "the interim registering process is to be performed".

Like in the first embodiment, the similarity matching unit 20b refers to the interim registration information stored in the interim-registration-information storage unit 21b at the time that is previously set by the administrator of the managing device 30 and stored in the similarity-matching-timing storage unit 21c. The similarity matching unit 20b then compares the new matching data corresponding to the interim registration information and all the registration biometric information (registration data) stored in the registration-biometric-information storage unit 21a with each other, to determine whether there is similar biometric information.

The similarity matching unit 20b discards the new matching data as the similarity-determination matching biometric information stored in the registration-biometric-information storage unit 21a upon completion of the similarity determining process.

The registration-result transmitting unit 20c and the similarity-information administrator-transmitting unit 20d notify the client device 10 or the managing device 30 by an e-mail of a result of the determination as to the similarity matching performed by the similarity matching unit 20b.

### Process Procedure performed by Biometric Authentication System according to Second Embodiment

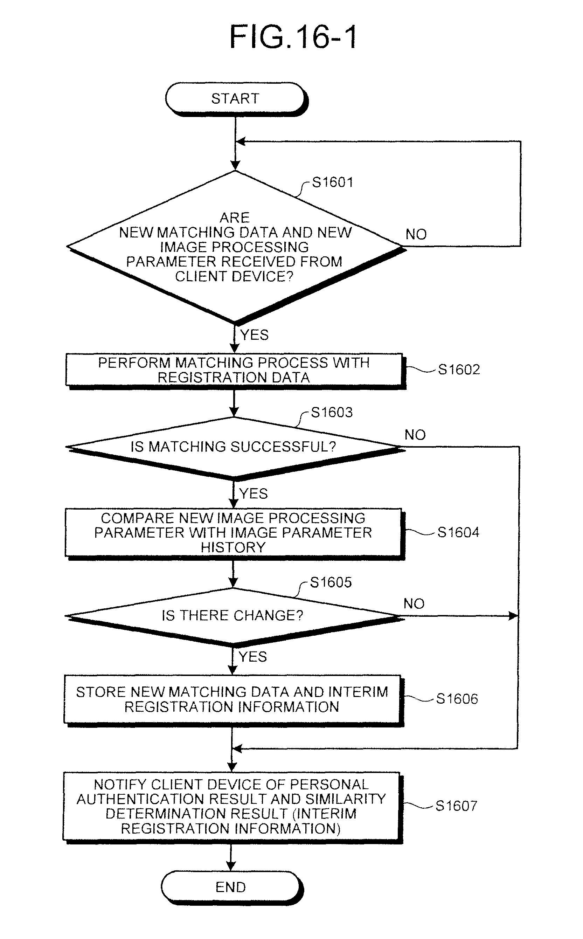

A process performed by the biometric authentication system according to the second embodiment is explained with reference to FIGS. 15 and 16-1. FIG. 15 is an explanatory diagram of a process performed by the client device according to the second embodiment. FIG. 16-1 is an explanatory diagram of the interim registering process performed by the authenticating server according to the second embodiment. An official registering process procedure performed by the authenticating server according to the second embodiment is the same as that of the official registering process procedure performed by the authenticating server according to the first embodiment, which is explained with reference to FIG. 9, and thus explanations thereof will be omitted.

### Process Procedure performed by Client Device according to Second Embodiment

As depicted in FIG. 15, when the client device 10 according to the second embodiment receives new biometric information for personal authentication from a registered user through the biometric-information input unit 10a (YES at Step S1501), the matching-data-extraction image-processing unit 10c extracts new matching data as the matching data from the received biometric information (Step S1502).

The extracted-data transmitting unit 10d transmits the new matching data as the matching data extracted by the matching-data-extraction image-processing unit 10c together with a new image processing parameter simultaneously obtained by the matching-data-extraction image-processing unit 10c, to the authenticating server 20 to request personal authentication (Step S1503).

The registration-result receiving unit 10e then receives data such as a result of the personal authentication and a result of the similarity determination from the authenticating server 20 (Step S1504). Cases in which the client device 10 according to the second embodiment receives the data from the authenticating server 20 according to the second embodiment include a first case in which data as a result of the interim registering process performed by the authenticating server 20, which will be explained later with reference to FIG. 16-1, is received, and a second case in which data as a result of the official registering process performed by the authenticating server according to the second embodiment, which is performed in the same procedure as that depicted in FIG. 9, is received. The process in the first case is explained with reference to FIG. 15.

When the data received from the authenticating server 20 includes the similarity determination result together with the personal authentication result (YES at Step S1505), the registration-result receiving unit 10e notifies the user (registered user) that owns the client device 10 of the personal authentication result together with the similarity determination result, by an e-mail (Step S1506), and ends the process. The notification includes the personal authentication result indicating "successful personal authentication" and the similarity determination result indicating "the interim registering process is to be performed", or the personal authentication result indicating "successful personal authentication" and the similarity determination result indicating "no interim registering process is to be performed".

Meanwhile, when the data received from the authenticating server 20 includes only the personal authentication result (NO at Step S1505), the registration-result receiving unit 10e notifies the user (registered user) that owns the client device 10 of the personal authentication result by an e-mail (Step S1507), and ends the process. The notification includes the personal authentication result indicating "personal authentication failure".

In the second case, the data of a similarity determination result is received from the authenticating server 20 at Step S1504, then the user (registered user) that owns the client device 10 is notified by an e-mail, and the process is ended. For example, a similarity determination result indicating that "you are continuously registered as an official permittee for the "1:N matching method" because there is no similar biometric information as a result of similarity matching", or a similarity determination result indicating that "your registration is changed from an official permittee for the "1:N matching method" to a permittee only for the "1:1 authorizing method" because similar biometric information is found as a result of similarity matching" is notified.

### Interim Registering Process Procedure performed by Authenticating Server according to Second Embodiment

As depicted in FIG. 16-1, when the extracted-data receiving unit 20a included in the authenticating server 20 according to the second embodiment receives the new matching data and the new image processing parameter of the registered user from the client device 10 (YES at Step S1601), the biometric-information matching unit 22 first performs a matching process between the new matching data and the registration data stored in the registration-biometric-information storage unit 21a (Step S1602).

When matching with the new matching data fails (NO at Step S1603), the registration-result transmitting unit 20c notifies the client device 10 of a personal authentication result indicating "personal authentication failure" because personal identification cannot be performed (Step S1607), and ends the process. The registration-result transmitting unit 20c can also notify the client device 10 of a similarity determination result (interim registration information) indicating "no interim registering process is to be performed".

Meanwhile, when the matching with the new matching data is successful and the personal authentication result indicates "successful personal authentication" (YES at Step S1603), the image-processing-parameter change-determining unit 20e compares the received new image processing parameter and the image parameter history stored in the registration-biometric-information storage unit 21a with each other (Step S1604).

When the image-processing-parameter change-determining unit 20e does not determine that the new image processing parameter has greatly changed as compared with the image parameter history stored in the registration-biometric-information storage unit 21a (NO at Step S1605), the registration-result transmitting unit 20c notifies the client device 10 of a personal authentication result indicating "successful personal authentication" and a similarity determination result (interim registration information) indicating "no interim registering process is to be performed" (Step S1607), and ends the process.

On the other hand, when the image-processing-parameter change-determining unit 20e determines that the new image processing parameter has greatly changed as compared with the image parameter history stored in the registration-biometric-information storage unit 21a (YES at Step S1605), the new matching data is stored in the "matching data" of the registration-biometric-information storage unit 21a as the similarity-determination matching biometric information, and further the ID of the registered user corresponding to the new matching data is stored in the interim-registration-information storage unit 21b as the interim registration information (Step S1606).

The registration-result transmitting unit 20c then notifies the client device 10 of a personal authentication result indicating "successful personal authentication" and a similarity determination result (interim registration information) indicating "the interim registering process is to be performed" (Step S1607), and ends the process.

### Effect of Second Embodiment

As described above, according to the second embodiment, it is possible to perform the determinations as to whether new biometric information received from registered users is similar to the registration biometric information of other persons because it has changed from states at the registration, in a lump in a period of time when the processing loads of the authenticating server 20 are low, for example. Therefore, smooth biometric authentication by the "1:N matching method" can be achieved. That is, while the operation of the biometric authentication system is retarded due to a large amount of processing time if the comparative matching is performed promptly each time when new biometric information is received from a registered user, retardation in the operation of the biometric authentication system can be avoided when the comparative matching is performed in a lump in a predetermined period of time as in the present invention. This enables the smooth biometric authentication by the "1:N matching method".

According to the second embodiment, changes in the biometric information can be determined based on changes in a specific image processing parameter, and thus factors of false matching in the "1:N matching method" can be eliminated efficiently. Therefore, smoother biometric authentication by the "1:N matching method" can be achieved. That is, as well as the similarity state of the biometric information at the registration, changes in the similarity state resulting from changes in the registered biometric information (for example, state changes in the biometric information according to seasons, or state changes in the biometric information according to growth) can be also addressed. Accordingly, smoother biometric authentication by the "1:N matching method" can be achieved.

When a person who has input the similarity-determination matching biometric information that has been determined to be similar biometric information is a registered user to be authenticated by the "1:N matching method", a determination result indicating that personal authentication is not performed even when new biometric information for personal authentication is received from the person can be notified the person. In this way, a possibility of false matching in the "1:N matching method" due to the person who has been determined to have the similar biometric information can be eliminated, and smoother biometric authentication by the "1:N matching method" can be achieved.

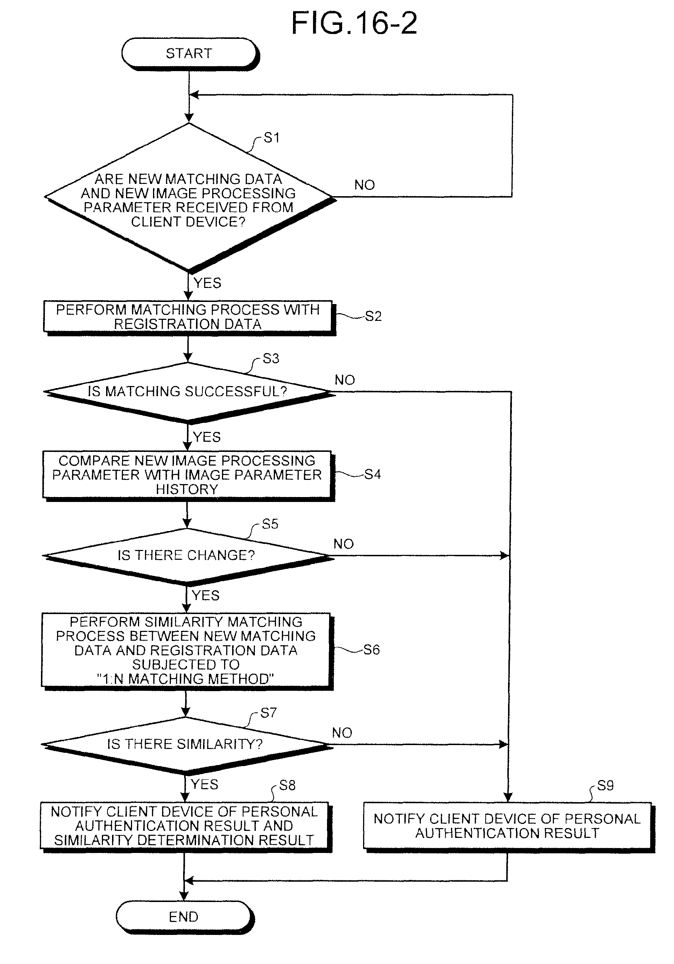

In the second embodiment, the example in which, when the image-processing-parameter change-determining unit 20e determines that a new image processing parameter has greatly changed as compared with the image parameter history stored in the registration-biometric-information storage unit 21a, the interim registering process is performed and then the similarity matching process is performed later in a lump as depicted in FIG. 16-1 is explained. The present invention is not limited thereto. When the new image processing parameter is determined to have greatly changed, the similarity matching process between the new matching data corresponding to the new image processing parameter and the registration data corresponding to the "1:N matching method" among the registration data stored in the registration-biometric-information storage unit 21a can be immediately performed, and then the similarity determination result can be notified the client device 10 together with the personal authentication result. A process procedure performed by the authenticating server 20 according to this modification is explained with reference to FIG. 16-2. FIG. 16-2 is an explanatory diagram of a modification of the interim registering process and the official registering process performed by the authenticating server according to the second embodiment.

As depicted in FIG. 16-2, when the extracted-data receiving unit 20a included in the authenticating server 20 according to this modification receives new matching data and a new image processing parameter of a registered user from the client device 10 (YES at Step S1), the biometric-information matching unit 22 first performs a matching process between the new matching data and the registration data stored in the registration-biometric-information storage unit 21a (Step S2).

When matching of the new matching data fails (NO at Step S3), the registration-result transmitting unit 20c notifies the client device 10 of a personal authentication result indicating "personal authentication failure" because personal identification cannot be performed (Step S9), and ends the process.

Meanwhile, when matching of the new matching data is successful and the personal authentication result indicates "successful personal authentication" (YES at Step S3), the image-processing-parameter change-determining unit 20e compares the received new image processing parameter and the image parameter history stored in the registration-biometric-information storage unit 21a with each other (Step S4).

When the image-processing-parameter change-determining unit 20e does not determine that the new image processing parameter has greatly changed as compared with the image parameter history stored in the registration-biometric-information storage unit 21a (NO at Step S5), the registration-result transmitting unit 20c notifies the client device 10 of the personal authentication result indicating "successful personal authentication" (Step S9), and ends the process.

On the other hand, when the image-processing-parameter change-determining unit 20e determines that the new image processing parameter has greatly changed as compared with the image parameter history stored in the registration-biometric-information storage unit 21a (YES at Step S5), the similarity matching unit 20b performs a similarity matching process between the new matching data and the registration data that is subjected to the "1:N matching method" among the registration data stored in the registration-biometric-information storage unit 21a (Step S6).

When the registration data that are subjected to the "1:N matching method" include no data similar to the new matching data (NO at Step S7), the registration-result transmitting unit 20c notifies the client device 10 of the personal authentication result indicating "successful personal authentication" (Step S9), and ends the process.

Meanwhile, when the registration data subjected to the "1:N matching data" include data similar to the new matching data (YES at Step S7), the registration-result transmitting unit 20c notifies the client device 10 and the managing device 30 of the personal authentication result indicating "successful personal authentication" and a similarity determination result indicating "there is similar biometric information" (Step S8), and ends the process. Details of the notification as the similarity determination result are that "your registration is changed from an official permittee for the "1:N matching method" to a permittee only for the "1:1 authenticating method" because similar biometric information is found as a result of similarity matching", for example.

In this way, when target persons for the similarity matching process are limited to registered users that are registered as permittees for the "1:N matching method" and usually small in number in an authentication system, the similarity matching process can be performed quickly. Accordingly, smooth biometric authentication by the "1:N matching method" can be achieved.

### Third embodiment

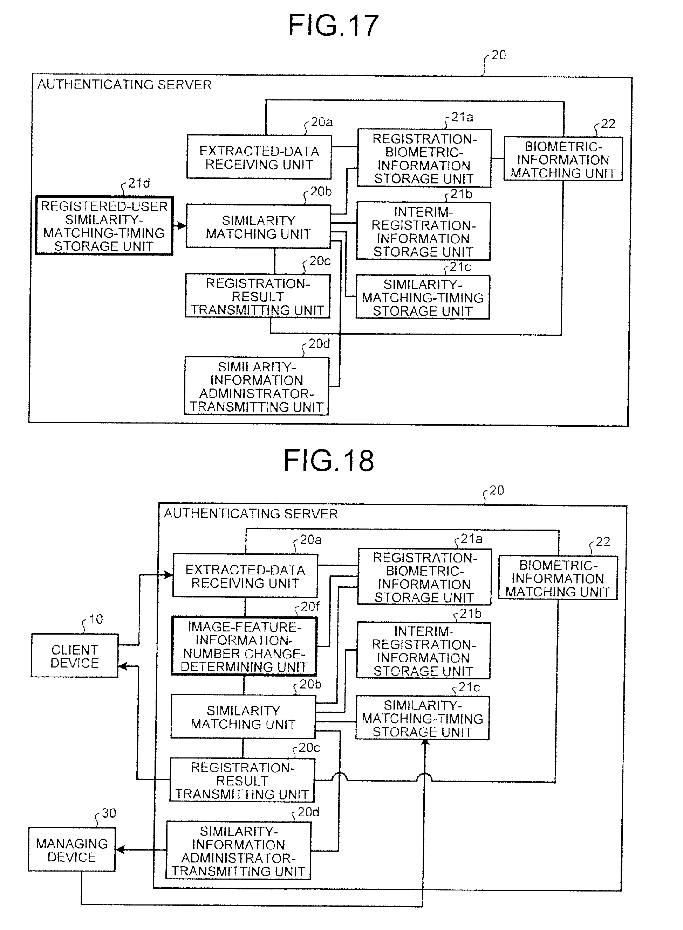

In the second embodiment, the example in which whether to perform the similarity matching for new matching data is determined by using the image parameter is explained. In a third embodiment, an example in which a period for performing similarity matching for all new matching data is previously set is explained with reference to FIG. 17. FIG. 17 is an explanatory diagram of a biometric authentication system according to the third embodiment.

The authenticating server 20 included in the biometric authentication system according to the third embodiment previously sets a date and time as a period in which new matching data extracted from new biometric information that is received from a registered user for personal authentication is stored as the similarity-determination matching biometric information, and stores the date and time in a registered-user similarity-matching-timing storage unit 21d as depicted in FIG. 17. For example, a season (period) in which the biometric information is liable to change is set as timing of performing the similarity determining process for the new biometric information received from the registered user for personal authentication. More specifically, winter (for example, January 1) when fingertips are liable to be in dry conditions and summer (for example, August 1) when the fingertips are liable to be in wet conditions are set as the timing of performing the similarity determining process.

In this way, when a time and date of entry into a season when the biometric information is liable to change is set as the timing of performing the similarity determining process for the new biometric information received from the registered user for the personal authentication, factors of false matching in the "1:N matching method" can be efficiently eliminated. Accordingly, smoother biometric authentication by the "1:N matching method" can be achieved.

### Fourth embodiment

In the second embodiment, the example in which whether to perform the similarity matching for new matching data is determined by using the image parameter obtained during the image processing is explained. In a fourth embodiment, an example in which whether to perform the similarity matching for new matching data is determined by using the number of pieces of image feature information obtained during the image processing is explained with reference to FIG. 18. FIG. 18 is an explanatory diagram of a biometric authentication system according to the fourth embodiment.

The authenticating server 20 included in the biometric authentication system according to the fourth embodiment stores in the registration-biometric-information storage unit 21a, histories of the numbers of pieces of image feature information obtained during extraction of matching data by the image processing from biometric image information input by registered users at the time of registration and from biometric image information input by the registered users at the time of personal authentication.

An image-feature-information-number change-determining unit 20f obtains from the client device 10 through the extracted-data receiving unit 20a, a new image feature information number, which is the number of pieces of image feature information obtained during extraction of new matching data as the matching data from new biometric image information input by a registered user for personal authentication. When it is confirmed that the new image feature information number has greatly changed as compared with the history of image feature information numbers stored in the registration-biometric-information storage unit 21a, the image-feature-information-number change-determining unit 20f stores the new matching data in the registration-biometric-information storage unit 21a as the similarity-determination matching biometric information.

The image feature information is information used for comparative matching in biometric authentication, such as an end point and a branch point of a fingerprint extracted from a fingerprint image in the case of fingerprint authentication. The image feature information number is the number of the end points or the branch points of the fingerprint extracted as the image feature information.

In this way, when changes in the biometric information is determined based on changes in the number of pieces of specific image feature information, factors of false matching in the "1:N matching method" can be efficiently eliminated. Accordingly, smoother biometric authentication by the "1:N matching method" can be achieved.

A history of determination values that are calculated when a registered user is authenticated as indices for matching determination can be stored separately. When it is confirmed that a new determination value, which is a determination value calculated by using new biometric image information input by the registered user for personal authentication has greatly changed as compared with the stored determination values, the new matching data is stored in the similarity-determination matching biometric information.

Accordingly, changes in the biometric information can be determined based on changes in a specific determination value, such as a concordance score calculated for matching determination and a concordance rate calculated as a final matching determination result. Therefore, factors of false matching in the "1:N matching method" can be efficiently eliminated, and smoother biometric authentication by the "1:N matching method" can be performed.

### Fifth embodiment

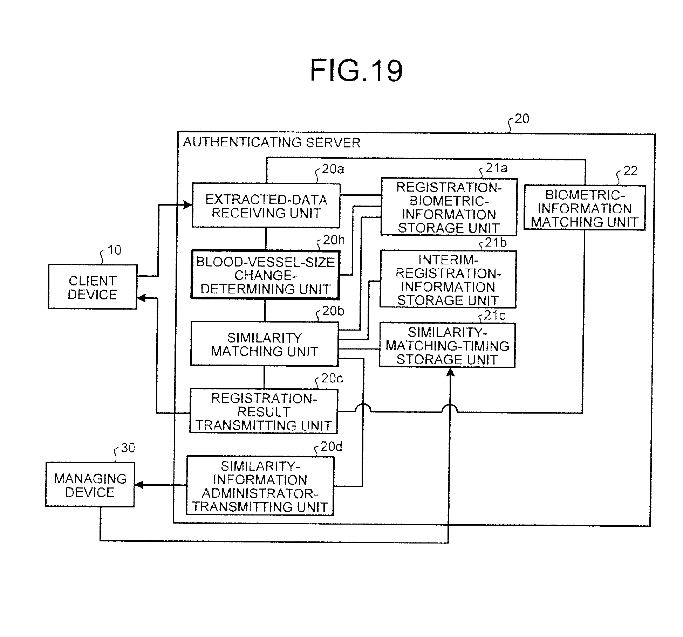

In the first to fourth embodiments, the examples in which the similarity matching process is performed when the fingerprint authentication is performed as the biometric authentication are explained. In a fifth embodiment, an example in which the similarity matching process is performed when vein authentication is performed as the biometric authentication is explained with reference to FIG. 19. FIG. 19 is an explanatory diagram of a biometric authentication system according to the fifth embodiment.

The authenticating server 20 included in the biometric authentication system according to the fifth embodiment stores in the registration-biometric-information storage unit 21a, histories of blood vessel sizes of registered users based on blood vessel image information of veins input by the registered users at the time of registration and based on blood vessel image information input by the registered users at the time of personal authentication.

A blood-vessel-size change-determining unit 20h obtains from the client device 10 through the extracted-data receiving unit 20a, a blood vessel size of a registered user obtained during extraction of new matching data as the matching data from new blood vessel image information that is input by the registered user for personal authentication. When it is confirmed that the blood vessel size of the registered user has greatly changed as compared with the history of the blood vessel sizes stored in the registration-biometric-information storage unit 21a, the blood-vessel-size change-determining unit 20h stores the new matching data in the registration-biometric-information storage unit 21a as the similarity-determination matching biometric information.

In this way, when the palm vein authentication is performed, changes in the biometric information can be determined based on changes in the specific blood vessel size, and factors of false matching in the "1:N matching method" can be efficiently eliminated. Accordingly, smoother biometric authentication by the "1:N matching method" can be achieved.

### Sixth embodiment

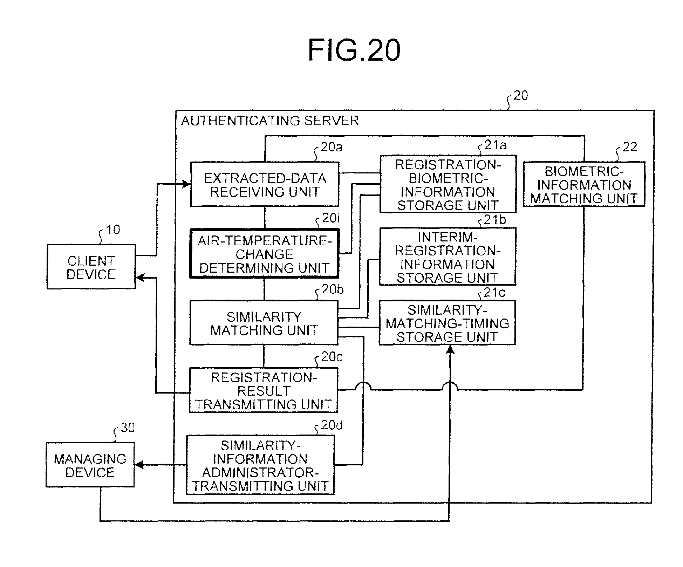

In the second, fourth, and fifth embodiments, the examples in which the similarity matching process is performed by determining changes in the biometric information based on changes in the specific value and then are explained. In a sixth embodiment, an example in which the similarity matching process is performed by using changes in an air temperature as a factor having a high possibility of changes in the biometric information is explained with reference to FIG. 20. FIG. 20 is an explanatory diagram of a biometric authentication system according to the sixth embodiment.

The client device 10 or the authenticating server 20 of the biometric authentication system according to the sixth embodiment includes an air-temperature indicator that obtains an air temperature. The authenticating server 20 stores in the registration-biometric-information storage unit 21a, histories of air temperatures obtained by the air-temperature indicator at the time of registration of registered users and air temperatures obtained by the air-temperature indicator at the time of personal authentication of the registered users.

When it is confirmed that an air temperature practically obtained by the air-temperature indicator during extraction of new matching data from new biometric information input by a registered user for personal authentication has greatly changed as compared with the air-temperature history stored in the registration-biometric-information storage unit 21a, an air-temperature-change determining unit 20i stores the new matching data in the registration-biometric-information storage unit 21a as the similarity-determination matching biometric information.

For example, when the air-temperature data practically obtained has greatly changed from that at the registration (for example, ten degrees or more in either direction), the similarity matching process for the new matching data extracted from the new biometric information input by the registered user is performed.

In this way, when the palm vein authentication is performed, changes in the air temperature, which is a main factor that causes changes in the blood vessel size, can be set as a period for timing of the similarity determining process, and factors of false matching in the "1:N matching method" can be efficiently eliminated. Accordingly, smoother biometric authentication by the "1:N matching method" can be achieved.

### Seventh embodiment

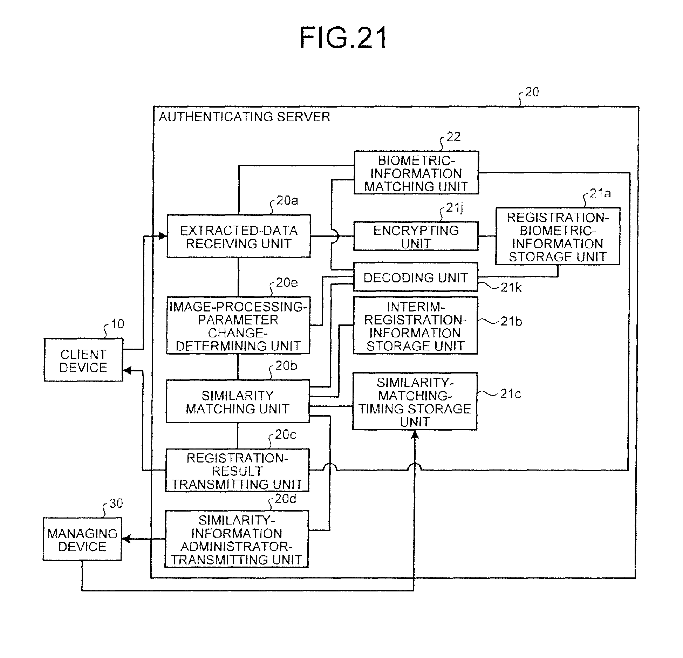

In a seventh embodiment, an example in which security of a biometric authentication system is ensured by an encrypting process is explained with reference to FIG. 21. FIG. 21 is an explanatory diagram of a biometric authentication system according to the seventh embodiment.

The biometric authentication system according to the seventh embodiment encrypts all or a part of the biometric information and information related to the biometric information, and stores therein encrypted information. For example, as depicted in FIG. 21, the authenticating server 20 additionally includes an encrypting unit 21j between the extracted-data receiving unit 20a and the registration-biometric-information storage unit 21a, and a decoding unit 21k between the image-processing-parameter change-determining unit 20e and the similarity matching unit 20b, and the registration-biometric-information storage unit 21a. In this way, all of the biometric information and the information related to the biometric information stored in the registration-biometric-information storage unit 21a is encrypted, and the biometric information and the biometric information stored in the registration-biometric-information storage unit 21a is decoded when it is processed by the image-processing-parameter change-determining unit 20e and the similarity matching unit 20b.

In this way, even when the biometric information and the information related to the biometric information is sniffed, misuse of the information can be avoided. Accordingly, smoother biometric authentication by the "1:N matching method" can be achieved.

### Eighth embodiment

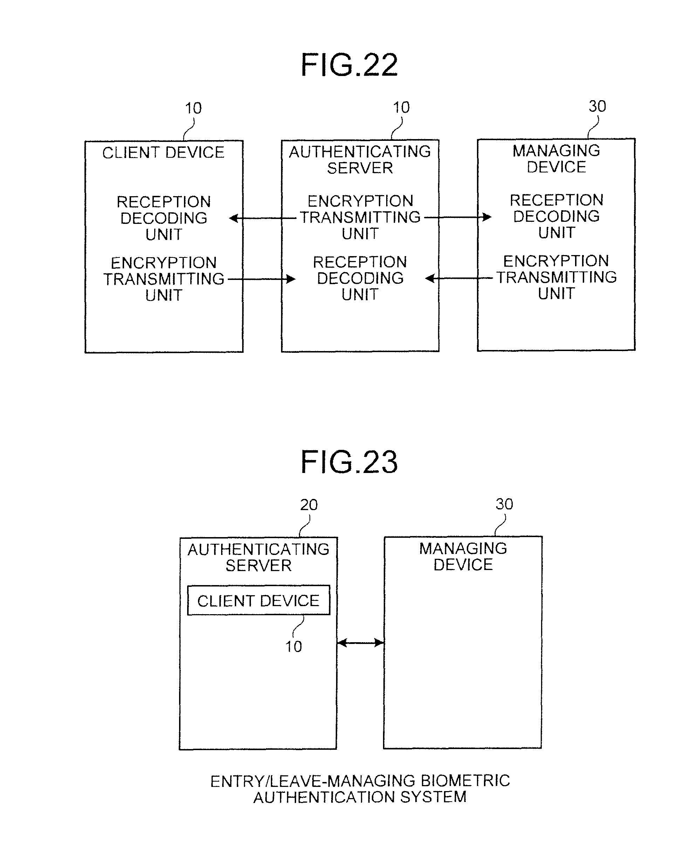

In an eighth embodiment, an example in which security of a biometric authentication system is ensured by encrypting data to be communicated is explained with reference to FIG. 22. FIG. 22 is an explanatory diagram of a biometric authentication system according to the eighth embodiment.

The biometric authentication system according to the eighth embodiment performs communication by encrypting all or a part of information to be communicated in the system. For example, the biometric authentication system includes an encryption transmitting unit that encrypts data and transmits encrypted data, and a reception decoding unit that decodes received encrypted data, in each of the client device 10, the authenticating server 20, and the managing device 30, as depicted in FIG. 22.

In this way, even when information to be communicated in the system is sniffed, misuse of the information can be avoided, and therefore smoother biometric authentication by the "1:N matching method" can be achieved.

### Ninth embodiment

In the first to eighth embodiments, the biometric authentication systems each including three devices are explained. In a ninth embodiment, a biometric authentication system including two devices is explained with reference to FIG. 23. FIG. 23 is an explanatory diagram of a biometric authentication system according to the ninth embodiment.

The biometric authentication system according to the ninth embodiment is a standalone biometric authentication system in which the authenticating server 20 is integrated with the client device 10 as depicted in FIG. 23. The authenticating server 20 can be installed at an entrance of a room, for example, to be used as an entry/leave-managing biometric authentication system. Accordingly, the same effects as those of the first to eighth embodiments can be provided.

In the first to ninth embodiments described above, examples in which various processes are realized by hardware logics have been explained. However, the present invention is not limited thereto, and the processes can be realized by causing a computer such as a personal computer or a workstation to execute a program previously provided. This program can be distributed through a network such as the Internet. It is also possible that the program is recorded in a computer-readable recording medium such as a hard disk, a flexible disk (FD), a compact disk read only memory (CD-ROM), a magneto-optical disk (MO), and a digital versatile disk (DVD), and executed by causing the computer to read the program from the recording medium.

Among the respective processes described in the above embodiments, all or a part of the processes explained as being performed automatically can be performed manually, or all or a part of the processes explained as being performed manually can be performed automatically by a known method. In addition, process procedures, specific names, and information (such as a registration time of information indicating successful authentication) including various kinds of data and parameters mentioned in the above descriptions and depicted in the drawings can be arbitrarily changed unless otherwise specified.

Respective constituent elements of respective devices depicted in the drawings are functionally conceptual, and physically the same configuration depicted in the drawings is not always necessary. That is, the specific mode of distribution and integration of the devices is not limited to the depicted ones (the mode in FIG. 2, for example), and all or a part thereof can be functionally or physically distributed or integrated in an arbitrary unit, according to various kinds of load and the status of use, such as integrating the registration-data-extraction image-processing unit 10b and the matching-data-extraction image-processing unit 10c. In addition, all or an arbitrary part of respective processing functions performed by the respective devices can be realized by a CPU and by a program analyzed and executed in the CPU, or realized as hardware by a wired logic.

### INDUSTRIAL APPLICABILITY

As described above, the biometric authentication system and the biometric authentication program according to the present invention are useful when the biometric authentication system includes an authenticating server that receives biometric information and performs personal authentication, or a client device that receives biometric information and an authenticating server that receives the biometric information from the client device and performs personal authentication, and a managing device that manages the personal authentication performed by the authenticating server. Particularly, the biometric authentication system and the biometric authentication program are suitable for providing smooth biometric authentication by the "1:N matching method".

## Claims

1. A biometric authentication system, comprising:
a client device that receives biometric information;
an authenticating server that receives the biometric information from the client device and performs personal authentication; and
a managing device that manages the personal authentication performed by the authenticating server, wherein
the authenticating server includes
a registration-biometric-information storage unit that stores therein registration biometric information that is biometric information of registered users previously registered as users, and is referred to at the personal authentication as comparison targets to the received biometric information, and personal authenticating methods;
a biometric-information matching unit that matches the received biometric information with the registration biometric information stored in the registration-biometric-information storage unit;
a similarity-determination matching-biometric-information storage unit that stores therein the received biometric information as similarity-determination matching biometric information to be matched for similarity determination, to determine based on the matching whether the received biometric information is similar biometric information similar to any of the registration biometric information stored in the registration-biometric-information storage unit;
a similar-biometric-information determining unit that determines whether the similar biometric information is included in the similarity-determination matching biometric information by comparing the similarity-determination matching biometric information stored in the similarity-determination matching-biometric-information storage unit and the registration biometric information stored in the registration-biometric-information storage unit with each other at a predetermined time; and
a similarity-information output unit that outputs similarity information related to the similarity-determination matching biometric information determined to be the similar biometric information when the similarity-determination matching biometric information determined by the similar-biometric-information determining unit to be the similar biometric information is included in the similarity-determination matching biometric information stored in the similarity-determination matching-biometric-information storage unit.

2. The biometric authentication system according to claim 1, wherein
when the client device or the authenticating server receives the biometric information from a registration requestor who requests registration as a user,
the similarity-determination matching-biometric-information storage unit stores therein the biometric information received from the registration requestor as the similarity-determination matching biometric information together with the personal authenticating method, and
the similar-biometric-information determining unit determines whether there is the similar biometric information by comparing the similarity-determination matching biometric information of the registration requestor, stored in the similarity-determination matching-biometric-information storage unit and the registration biometric information stored in the registration-biometric-information storage unit with each other at a predetermined time.

3. The biometric authentication system according to claim 2, wherein
when the client device or the authenticating server newly receives the biometric information for personal authentication from the registered user,
the similarity-determination matching-biometric-information storage unit stores therein the biometric information newly received from the registered user as the similarity-determination matching biometric information together with the corresponding personal authenticating method, and
the similar-biometric-information determining unit determines whether there is the similar biometric information by comparing the similarity-determination matching biometric information of the registered user, stored in the similarity-determination matching-biometric-information storage unit and the registration biometric information stored in the registration-biometric-information storage unit with each other at a predetermined time.

4. The biometric authentication system according to claim 3, wherein
when there are registered users that are to be authenticated by a 1:1 authenticating method in the authenticating server and registered users that are to be authenticated by a 1:N matching method in the authenticating server,
the authenticating server further includes a 1:N-user-information storage unit that stores therein information of the registered users that are to be authenticated by the 1:N matching method, and
the similar-biometric-informaticn determining unit determines whether there is the similar biometric information by promptly comparing the registration biometric information corresponding to the registered users that are to be authenticated by the 1:M matching method, stored in the 1:N-user-information storage unit, among the registration biometric information stored in the registration-biometric-information storage unit, and the similarity-determination matching biometric information of the registration requestor, stored in the similarity-determination matching-biometric-information storage unit with each other, and determines whether there is the similar biometric information by comparing the similarity-determination matching biometric information and all the registration biometric information stored in the registration-biometric-information storage unit with each other at a predetermined time.

5. The biometric authentication system according to claim 4, wherein
when formats of registration data that are extracted from the biometric information as the registration biometric information and formats of matching data that are extracted from the biometric information to be matched with the registration biometric information are different in the client device or the authenticating server,
the client device or the authenticating server includes a data extracting unit that extracts the registration data and the matching data from the received biometric information of the registration requestor, and
the authenticating server further includes an extracted-data storage unit that stores the registration data extracted by the data extracting unit in the registration-biometric-information storage unit as the registration biometric information, and also stores the matching data extracted by the data extracting unit in the similarity-determination matching-biometric-information storage unit as the similarity-determination matching biometric information.

6. The biometric authentication system according to claim 5, wherein the similar-biometric-information determining unit discards the matching data as the similarity-determination matching biometric information stored in the similarity-determination matching-biometric-information storage unit when a similarity determining process is finished.

7. The biometric authentication system according to claim 6, wherein the similar-biometric-information determining unit determines whether there is the similar biometric information at a time previously set by an administrator of the managing device as the predetermined time.

8. The biometric authentication system according to claim 6, wherein the similar-biometric-information determining unit determines whether there is the similar biometric information at a time presently specified by an administrator of the managing device as the predetermined time.

9. The biometric authentication system according to claim 5, wherein the authenticating server further includes a time setting and storage unit that previously sets a time at which the similarity-determination matching-biometric-information storage unit stores therein the biometric information newly received for personal authentication from the registered user as the similarity-determination matching biometric information, and stores therein the set time.

10. The biometric authentication system according to claim 5, wherein
when the matching data is extracted by image processing from biometric image information input as the biometric information to the client device or the authenticating server,
the authenticating server further includes
a history storage unit that stores therein a history of image processing parameters that are obtained during extraction of the matching data by the image processing from biometric image information input by the registered user at registration and from biometric image information input by the registered user at personal authentication; and
a change confirming and storage unit that, when confirming that a new image processing parameter that is obtained during extraction of new matching data as the matching data from biometric image information newly input by the registered user for personal authentication has greatly changed as compared with the image processing parameters stored in the history storage unit, stores the new matching data in the similarity-determination matching-biometric-information storage unit as the similarity-determination matching biometric information.

11. The biometric authentication system according to claim 5, wherein
the history storage unit stores therein a history of the number of pieces of image feature information obtained during extraction of the matching data by the image processing from biometric image information input by the registered user at registration and from biometric image information input by the registered user at personal authentication, and
when confirming that the number of pieces of new image feature information that is obtained during extraction of new matching data as the matching data from biometric image information newly input by the registered user for personal authentication has greatly changed as compared with the numbers of pieces of the image feature information stored in the history storage unit, the change confirming and storage unit stores the new matching data in the similarity-determination matching-biometric-information storage unit as the similarity-determination matching biometric information.

12. The biometric authentication system according to claim 5, wherein
the history storage unit stores therein a history of determination values calculated as indices for matching determination when the registered user is authenticated, and
when confirming a new determination value that is calculated by using biometric image information newly input by the registered user for personal authentication has greatly changed as compared with the determination values stored in the history storage unit, the change confirming and storage unit stores the new matching data in the similarity-determination matching-biometric-information storage unit as the similarity-determination matching biometric information.

13. The biometric authentication system according to claim 5, wherein
when blood-vessel image information as image information of a blood vessel is obtained as the biometric information and the matching data is extracted from the blood-vessel image information by image processing,
the history storage unit stores therein a history of sizes of a blood vessel of the registered user based on blood-vessel image information input by the registered user at registration and based on blood-vessel image information input by the registered user at personal authentication, and
when confirming that a size of the blood vessel of the registered user practically obtained during extraction of new matching data as the matching data from blood-vessel image information newly input for personal authentication by the registered user has greatly changed as compared with the sizes of the blood vessel of the registered user, stored in the history storage unit, the change confirming and storage unit stores the new matching data in the similarity-determination matching-biometric-information storage unit as the similarity-determination matching biometric information.

14. The biometric authentication system according to claim 5, wherein
the client device or the authenticating server further includes an air-temperature obtaining unit that obtains an air temperature,
the history storage unit stores therein a history of an air temperature at registration of the registered user, obtained by the air-temperature obtaining unit, and an air temperature at personal authentication of the registered user, obtained by the air-temperature obtaining unit, and
when confirming that an air temperature practically obtained by the air-temperature obtaining unit during extraction of new matching data as the matching data from the biometric information newly input by the registered user for personal authentication has greatly changed as compared with the air temperatures stored in the history storage unit, the change confirming and storage unit stores the new matching data in the similarity-determination matching-biometric-information storage unit as the similarity-determination matching biometric information.

15. The biometric authentication system according to claim 5, wherein the similarity-information output unit synchronously notifies by an e-mail, a terminal owned by a person who has input biometric information as the similarity-determination matching biometric information or a terminal owned by an administrator of the managing device of information related to registration biometric information determined to be similar to the similarity-determination matching biometric information, a change request for the similarity-determination matching biometric information, and details of a process performed by the authenticating server when the information is determined to be similar to the similarity-determination matching biometric information, as the similarity information.

16. The biometric authentication system according to claim 5, wherein the similarity-information output unit notifies a person who has input biometric information as the similarity-determination matching biometric information of a result of determination indicating that there is registration biometric information similar to the similarity-determination matching biometric information, a change request for the similarity-determination matching biometric information, and details of a process performed by the authenticating server when the information is determined to be similar to the similarity-determination matching biometric information, as the similarity information.

17. The biometric authentication system according to claim 5, wherein when a person who has input similarity-determination matching biometric information determined to be the similar biometric information is the registered user who is to be authenticated by the 1:N matching method and the information of which is stored in the 1:N-user-information storage unit, the similarity-information output unit notifies the person of a result of determination indicating that no personal authentication is performed even when the biometric information for personal authentication is newly received from the person.

18. The biometric authentication system according to claim 5, wherein all of a part of the biometric information and information related to the biometric information is encrypted and stored.

19. The biometric authentication system according to claim 5, wherein all of a part of information to be communicated in the system is encrypted and communicated.

20. A biometric authentication program that causes a computer to execute a biometric authenticating method comprising a client device that receives biometric information, an authenticating server that receives the biometric information from the client device and performs personal authentication, and a managing device that manages the personal authentication performed by the authenticating server, wherein
the authenticating server causes the computer to perform:
a registration-biometric-information storage step of storing registration biometric information that is biometric information of registered users previously registered as users, and is referred to at the personal authentication as comparison targets to the received biometric information, and personal authenticating methods in a first storage unit;
a biometric-information matching step of matching the received biometric information with the registration biometric information stored in the first storage unit;
a similarity-determination matching-biometric-information storage step of storing the received biometric information as similarity-determination matching biometric information to be matched for similarity determination in a second storage unit, to determine based on the matching whether the received biometric information is similar biometric information similar to any of the registration biometric information stored in the first storage unit;
a similar-biometric-information determining step of determining whether the similar biometric information is included in the similarity-determination matching biometric information by comparing the similarity-determination matching biometric information stored in the second storage unit and the registration biometric information stored in the first storage unit with each other at a predetermined time; and
a similarity-information output step of outputting similarity information related to the similarity-determination matching biometric information determined to be the similar biometric information when the similarity-determination matching biometric information determined to be the similar biometric information in the similar-biometric determining step is included in the similarity-determination matching biometric information stored in the second storage unit.
